# EUROPÄISCHE PATENTSCHRIFT

(11) **EP 3 485 631 B1**
(45) Veröffentlichungstag und Bekanntmachung des Hinweises auf die Patenterteilung: **22.09.2021**
(21) Anmeldenummer: 17735585.6
(22) Anmeldetag: 10.07.2017
(51) Int. Cl.: H04L 29/08

(54) **DETEKTIONSVORRICHTUNG, VERFAHREN UND COMPUTERPROGRAMM ZUM DETEKTIEREN EINER PHYSIKALISCHEN GRÖSSE SOWIE SERVER ZUM ZUORDNEN EINES SENDEZEITSCHLITZES**
DETECTION DEVICE, METHOD AND COMPUTER PROGRAMM FOR DETECTING A PHYSICAL QUANTITY AND SERVER FOR ALLOCATING A TRANSMISSION TIME SLOT
DISPOSITIF, PROCÉDÉ ET PROGRAMME INFORMATIQUE POUR LA DETECTION D'UNE GRANDEUR PHYSIQUE ET SERVEUR POUR ATTRIBUER UN INTERVAL DE TEMPS DE TRANSMISSION

(30) Priorität: 14.07.2016 EP 16179539
(43) Veröffentlichungstag der Anmeldung: 22.05.2019
(73) Patentinhaber: Deutsche Telekom AG, 53113 Bonn (DE)
(72) Erfinder: NEUBACHER, Andreas, A-2100 Korneuburg (AT)
(74) Vertreter: Braun-Dullaeus Pannen Emmerling Patent- & Rechtsanwaltspartnerschaft mbB
(86) Internationale Anmeldenummer: PCT/EP2017/067286
(87) Internationale Veröffentlichungsnummer: WO 2018/011147

(56) Entgegenhaltungen:
- US-A1- 2015 341 874
- ACHIM BERGER ET AL: "TDMA approach for efficient data collection in wireless sensor networks", MECHATRONICS (ICM), 2011 IEEE INTERNATIONAL CONFERENCE ON, IEEE, 13. April 2011 (2011-04-13), Seiten 755-760, XP031911235, DOI: 10.1109/ICMECH.2011.5971215 ISBN: 978-1-61284-982-9

## Beschreibung

### TECHNISCHES GEBIET

Die vorliegende Erfindung betrifft das Gebiet der Detektion einer physikalischen Größe und der Übertragung von Daten, welche die physikalische Größe repräsentieren, über ein Kommunikationsnetzwerk.

### TECHNISCHER HINTERGRUND

Unter dem Begriff des Internets der Dinge (engl. Internet of Things, loT) wird die Vernetzung physikalischer Objekte über ein Kommunikationsnetzwerk verstanden, wodurch beispielsweise eine effizientere Überwachung der physikalischen Objekte und ein Austausch von Informationen über die physikalischen Objekte ermöglicht wird.

Das Internet der Dinge ist insbesondere im Bereich der Hausautomatisierungstechnik und Industrieautomatisierungstechnik von zunehmender Bedeutung, wobei unterschiedliche physikalische Größen, wie beispielsweise eine Temperatur oder ein Energieverbrauch, effizient detektiert werden sollen. Im Bereich der Hausautomatisierungstechnik werden beispielsweise Heizungssensoren zur Abrechnung der Heizungskosten zunehmend mit entsprechender Funktionalität ausgestattet. Im Bereich der Industrieautomatisierung sollen beispielsweise Produktionsabläufe optimiert und effizienter durchgeführt werden. Entsprechende Ansätze hierfür werden zumeist unter dem Begriff der Industrie 4.0 zusammengefasst.

Zur Detektion der physikalischen Größe sowie zur Übertragung der Daten, welche die physikalische Größe repräsentieren, werden üblicherweise kostengünstige Geräte eingesetzt. Der Zugriff auf den Kommunikationskanal wird dabei typischerweise nicht mittels komplexer Verfahren zur Medienzugriffssteuerung (engl. Media Access Control, MAC) gesteuert. Die Daten, welche die physikalische Größe repräsentieren, werden daher zumeist unkoordiniert ausgesendet. Dies kann jedoch zu Kollisionen und Verlusten von Daten auf dem Kommunikationskanal führen.

Die Veröffentlichung von ACHIM BERGER ET AL: "TDMA approach for efficient data collection in wireless sensor networks",MECHATRONICS (ICM), 2011 IEEE INTERNATIONAL CONFERENCE ON, IEEE, 13. April 2011 (2011-04-13), Seiten 755-760, XP031911235, offenbart einen Zeitmultiplexansatz für effizientes Datensammeln unter der Verwendung von Beacons.

### BESCHREIBUNG DER ERFINDUNG

Es ist daher die Aufgabe der vorliegenden Erfindung, ein effizientes Konzept zur Medienzugriffssteuerung auf einem Kommunikationskanal zu schaffen.

Diese Aufgabe wird durch die Merkmale der unabhängigen Ansprüche gelöst. Vorteilhafte Ausführungsformen der Erfindung sind Gegenstand der Beschreibung, der Zeichnungen sowie der abhängigen Ansprüche.

Die vorliegende Erfindung basiert auf der Erkenntnis, dass die obige Aufgabe durch eine Detektionsvorrichtung gelöst werden kann, welcher eine Identitätskennung zugeordnet ist, und welche ausgebildet ist, ein Broadcastsignal von einer Serverentität über ein Kommunikationsnetzwerk zu empfangen. Die Detektionsvorrichtung ist dabei einer Gruppe von Detektionsvorrichtungen zugeordnet, wobei jede Detektionsvorrichtung der Gruppe mit der Serverentität kommunizieren und das Broadcastsignal empfangen kann.

Das Broadcastsignal zeigt eine Belegung von Sendezeitschlitzen in einem vorbestimmten Sendeintervall durch Zuordnung von Identitätskennungen der Detektionsvorrichtungen zu Sendezeitschlitzen an. Die Detektionsvorrichtung ist ausgebildet, einen freien Sendezeitschlitz des vorbestimmten Sendeintervalls auszuwählen, falls keinem Sendezeitschlitz die Identitätskennung der Detektionsvorrichtung zugeordnet ist, und Daten in dem ausgewählten Sendezeitschlitz über das Kommunikationsnetzwerk an die Serverentität auszusenden. Die Detektionsvorrichtung kann ferner ausgebildet sein, einen belegten Sendezeitschlitz des vorbestimmten Sendeintervalls auszuwählen, falls dem belegten Sendezeitschlitz die Identitätskennung der Detektionsvorrichtung zugeordnet ist.

Dadurch wird erreicht, dass ein Zugriff der Gruppe von Detektionsvorrichtungen auf den Kommunikationskanal effizient gesteuert werden kann und zugleich eine kostengünstige Implementierung der einzelnen Detektionsvorrichtungen möglich wird. Jede Detektionsvorrichtung der Gruppe kann mithin selbstständig einen freien Sendezeitschlitz in dem vorbestimmten Sendeintervall auswählen und belegen. Die Serverentität kann daraufhin den jeweiligen Sendezeitschlitz der jeweiligen Detektionsvorrichtung durch Zuordnung der jeweiligen Identitätskennung zu dem jeweiligen Sendezeitschlitz fest zuordnen. In einem darauffolgenden Sendeintervall kann die jeweilige Detektionsvorrichtung den jeweils nun fest zugeordneten Sendezeitschlitz zum Aussenden von Daten verwenden. Die Sendeintervalle mit den jeweiligen Sendezeitschlitzen können sich periodisch wiederholen.

Gemäß einem ersten Aspekt betrifft die Erfindung eine Detektionsvorrichtung gemäß Anspruch 1.

Dadurch wird der Vorteil erreicht, dass ein effizientes Konzept zur Medienzugriffssteuerung auf einem Kommunikationskanal realisiert werden kann.

Die Identitätskennung der Detektionsvorrichtung kann der Detektionsvorrichtung bei deren Herstellung fest zugeordnet werden. Die Identitätskennung kann beispielsweise eine Media Access Control (MAC) Adresse oder eine International Mobile Station Equipment Identity (IMEI) Nummer sein, welche der Detektionsvorrichtung zugeordnet ist.

Gemäß einer Ausführungsform ist die Kommunikationsschnittstelle ausgebildet, einen belegten Sendezeitschlitz des vorbestimmten Sendeintervalls auszuwählen, falls dem belegten Sendezeitschlitz die Identitätskennung der Detektionsvorrichtung zugeordnet ist. Dadurch wird der Vorteil erreicht, dass ein Sendezeitschlitz, welcher von der Detektionsvorrichtung, beispielweise in einem vorhergehenden Sendeintervall, belegt worden ist, der Detektionsvorrichtung fest zugeordnet werden kann.

Gemäß einer Ausführungsform weist das Broadcastsignal eine Mehrzahl von Broadcastsignalabschnitten auf, wobei jeder Broadcastsignalabschnitt einem Sendezeitschlitz in dem vorbestimmten Sendeintervall zugeordnet ist, und wobei die Kommunikationsschnittstelle ausgebildet ist, die Mehrzahl von Broadcastsignalabschnitten aus dem Broadcastsignal zu extrahieren. Dadurch wird der Vorteil erreicht, dass die Belegung der Sendezeitschlitze in dem vorbestimmten Sendeintervall durch die Detektionsvorrichtung effizient bestimmt werden kann.

Ein freier Sendezeitschlitz in dem vorbestimmten Sendeintervall kann beispielsweise durch einen jeweiligen leeren Broadcastsignalabschnitt angezeigt werden. Ein belegter Sendezeitschlitz in dem vorbestimmten Sendeintervall kann beispielsweise durch die Anzeige einer Identitätskennung in dem jeweiligen Broadcastsignalabschnitt angezeigt werden. Das Broadcastsignal mit den Broadcastsignalabschnitten kann in einem Broadcastzeitschlitz angeordnet sein.

Gemäß einer Ausführungsform ist der Detektor ausgebildet, die Daten mit der Identitätskennung der Detektionsvorrichtung zu verknüpfen, wobei die Kommunikationsschnittstelle ausgebildet ist, die Daten mit der Identitätskennung der Detektionsvorrichtung in dem ausgewählten Sendezeitschlitz auszusenden. Dadurch wird der Vorteil erreicht, dass die ausgesendeten Daten der Detektionsvorrichtung durch die Serverentität effizient zugeordnet werden können.

Gemäß einer Ausführungsform zeigt das Broadcastsignal eine Menge von Daten an, welche durch die Serverentität in einem Sendezeitschlitz über das Kommunikationsnetzwerk empfangen wurden, wobei die Kommunikationsschnittstelle ausgebildet ist, die Menge mit einer Referenzmenge zu vergleichen. Dadurch wird der Vorteil erreicht, dass die Detektionsvorrichtung auf einen erfolgreichen Empfang von Daten in dem Sendezeitschlitz, insbesondere dem ausgewählten Sendezeitschlitz, durch die Serverentität schließen kann. Mithin kann auf ein Aussenden eines Bestätigungssignals zur Bestätigung des erfolgreichen Empfangs der Daten durch die Serverentität verzichtet werden.

Gemäß einer Ausführungsform ist der Detektor ausgebildet, die detektierte physikalische Größe mit einer vorbestimmten physikalischen Referenzgröße zu vergleichen, wobei die Kommunikationsschnittstelle ausgebildet ist, die Daten in dem ausgewählten Sendezeitschlitz auszusenden, falls die detektierte physikalische Größe die vorbestimmte physikalische Referenzgröße überschreitet. Dadurch wird der Vorteil erreicht, dass eine effiziente Überwachung der physikalischen Größe durch die Detektionsvorrichtung realisiert werden kann. Die Daten werden folglich nur ausgesendet, falls die detektierte physikalische Größe die vorbestimmte physikalische Referenzgröße überschreitet.

Gemäß einer Ausführungsform ist der Detektor ausgebildet, eine Temperatur, eine Feuchtigkeit, eine Energie, eine Leistung, eine Position, eine Geschwindigkeit, eine Beschleunigung, einen Winkel, eine Winkelgeschwindigkeit, eine Winkelbeschleunigung, eine Drehzahl, eine Kraft, ein Drehmoment, einen Energieverbrauch, einen Wasserverbrauch, einen Wärmeverbrauch oder einen Kraftstoffverbrauch als physikalische Größe zu bestimmen. Der Detektor kann hierfür einen Sensor zum Bestimmen der physikalischen Größe umfassen. Dadurch wird der Vorteil erreicht, dass physikalische Größen, welche im Bereich der Heimautomatisierungstechnik sowie im Bereich der Industrieautomatisierungstechnik von Bedeutung sind, effizient bestimmt werden können.

Gemäß einer Ausführungsform umfasst die Detektionsvorrichtung einen Zeitgeber, insbesondere eine Echtzeituhr, zum Bereitstellen eines Zeitsignals, wobei das Zeitsignal eine Zeitdifferenz zwischen einem gegenwärtigen Zeitpunkt und einem vorbestimmten Referenzzeitpunkt anzeigt, und wobei die Kommunikationsschnittstelle ausgebildet ist, einen Beginn des ausgewählten Sendezeitschlitzes auf der Basis des Zeitsignals zu bestimmen. Dadurch wird der Vorteil erreicht, dass auf die Bereitstellung eines externen Zeitsignals verzichtet werden kann und der Beginn des ausgewählten Sendezeitschlitzes durch die Detektionsvorrichtung effizient bestimmt werden kann.

Gemäß einer Ausführungsform ist die Kommunikationsschnittstelle ausgebildet, ein Zeitsynchronisationssignal von der Serverentität über das Kommunikationsnetzwerk zu empfangen, und wobei der Zeitgeber ausgebildet ist, das Zeitsignal auf der Basis des empfangenen Zeitsynchronisationssignals zu verändern. Dadurch wird der Vorteil erreicht, dass eine Synchronisation einer Mehrzahl von Zeitgebern hinsichtlich desselben Referenzzeitpunktes effizient realisiert werden kann.

Gemäß einer Ausführungsform umfasst der Zeitgeber einen Satellitennavigationsempfänger, insbesondere einen GPS-Satellitennavigationsempfänger oder einen GALILEO-Satellitennavigationsempfänger, wobei der Satellitennavigationsempfänger ausgebildet ist, ein Zeitsynchronisationssignal bereitzustellen, und wobei der Zeitgeber ausgebildet ist, das Zeitsignal auf der Basis des bereitgestellten Zeitsynchronisationssignals zu verändern. Dadurch wird der Vorteil erreicht, dass eine Synchronisation einer Mehrzahl von Zeitgebern hinsichtlich desselben Referenzzeitpunktes effizient realisiert werden kann.

Gemäß einer Ausführungsform umfasst der Zeitgeber einen Zeitzeichenempfänger, insbesondere einen DCF77-Empfänger, wobei der Zeitzeichenempfänger ausgebildet ist, ein Zeitsynchronisationssignal bereitzustellen, und wobei der Zeitgeber ausgebildet ist, das Zeitsignal auf der Basis des bereitgestellten Zeitsynchronisationssignals zu verändern. Dadurch wird der Vorteil erreicht, dass eine Synchronisation einer Mehrzahl von Zeitgebern hinsichtlich desselben Referenzzeitpunktes effizient realisiert werden kann.

Gemäß einer Ausführungsform ist die Identitätskennung der Detektionsvorrichtung eine Netzwerkadresse der Detektionsvorrichtung. Dadurch wird der Vorteil erreicht, dass die ausgesendeten Daten der Detektionsvorrichtung durch die Serverentität effizient zugeordnet werden können.

Die Netzwerkadresse kann der Detektionsvorrichtung beispielweise durch die Serverentität über das Kommunikationsnetzwerk zugewiesen werden. Die Netzwerkadresse der Detektionsvorrichtung kann eine Internet Protocol (IP) Adresse, beispielsweise eine IPv4-Adresse oder eine IPv6-Adresse, sein.

Gemäß einer Ausführungsform umfasst das Kommunikationsnetzwerk eine Mehrzahl von Subnetzwerken, wobei die Kommunikationsschnittstelle ausgebildet ist, die Daten über ein Subnetzwerk der Mehrzahl von Subnetzwerken auszusenden. Dadurch wird der Vorteil erreicht, dass die Mehrzahl von Subnetzwerken auf verschiedene Anwendungen ausgelegt werden können und eine effizientere Übertragung der Daten über das Kommunikationsnetzwerk realisiert werden kann.

Gemäß einer Ausführungsform ist das Kommunikationsnetzwerk ein Kommunikationsnetzwerk der fünften Generation (5G) oder einer weiteren Generation, wobei jedes Subnetzwerk ein Slice des Kommunikationsnetzwerkes ist. Dadurch wird der Vorteil erreicht, dass eine effiziente Übertragung der Daten über ein Kommunikationsnetzwerk der fünften Generation (5G) oder einer weiteren Generation realisiert werden kann.

Gemäß einem zweiten Aspekt betrifft die Erfindung eine Gruppe von Detektionsvorrichtungen gemäß Anspruch 7.

Gemäß einem dritten Aspekt betrifft die Erfindung eine Serverentität gemäß Anspruch 8.

Die Serverentität kann ausgebildet sein, freie Sendezeitschlitze und/oder belegte Sendezeitschlitze einer Mehrzahl von Detektionsvorrichtungen zu verwalten.

Die Serverentität kann eine Basisstation sein, wobei die Basisstation ausgebildet ist, über ein Funkkommunikationsnetzwerk als Kommunikationsnetzwerk mit der Detektionsvorrichtung zu kommunizieren. Die Serverentität kann ferner ein Controller sein, wobei der Controller einem Rücktransportnetzwerk (engl. backhaul network) des Kommunikationsnetzwerkes zugeordnet ist.

Gemäß einer Ausführungsform ist der Prozessor ausgebildet, ein weiteres Broadcastsignal zu erzeugen, wobei das weitere Broadcastsignal eine Zuordnung der Identitätskennung der Detektionsvorrichtung zu dem freien Sendezeitschlitz anzeigt, und wobei die Kommunikationsschnittstelle ausgebildet ist, das weitere Broadcastsignal an die Detektionsvorrichtung auszusenden. Der freie Sendezeitschlitz wird der Detektionsvorrichtung mithin als ein belegter Sendezeitschlitz in einem nachfolgenden Sendeintervall angezeigt, welchem die Identitätskennung der Detektionsvorrichtung zugeordnet ist. Dadurch wird der Vorteil erreicht, dass die Zuordnung des freien Sendezeitschlitzes zu der Detektionsvorrichtung effizient angezeigt werden kann.

Gemäß einer Ausführungsform umfasst die Serverentität einen Zeitgeber, insbesondere eine Echtzeituhr, zum Bereitstellen eines Zeitsignals, wobei das Zeitsignal eine Zeitdifferenz zwischen einem gegenwärtigen Zeitpunkt und einem vorbestimmten Referenzzeitpunkt anzeigt, wobei der Prozessor ausgebildet ist, ein Zeitsynchronisationssignal auf der Basis des Zeitsignals zu erzeugen, und wobei die Kommunikationsschnittstelle ausgebildet ist, das Zeitsynchronisationssignal über das Kommunikationsnetzwerk an die Detektionsvorrichtung auszusenden. Dadurch wird der Vorteil erreicht, dass eine Synchronisation einer Mehrzahl von Zeitgebern in verschiedenen Detektionsvorrichtungen hinsichtlich desselben Referenzzeitpunktes effizient realisiert werden kann.

Gemäß einer Ausführungsform ist die Kommunikationsschnittstelle ausgebildet, ein Zeitschlitzbelegungssignal von einer weiteren Serverentität über das Kommunikationsnetzwerk zu empfangen, wobei das Zeitschlitzbelegungssignal einen belegten Sendezeitschlitz in dem vorbestimmten Sendeintervall anzeigt, und wobei der Prozessor ausgebildet ist, das Broadcastsignal und/oder das weitere Broadcastsignal auf der Basis des Zeitschlitzbelegungssignals zu erzeugen. Dadurch wird der Vorteil erreicht, dass eine effiziente Verwaltung von freien Sendezeitschlitzen und/oder belegten Sendezeitschlitzen realisiert werden kann.

Gemäß einer Ausführungsform ist der Prozessor ausgebildet, einen belegten Sendezeitschlitz in dem vorbestimmten Sendeintervall zu bestimmen, und ein Zeitschlitzbelegungssignal zum Aussenden an eine weitere Serverentität zu erzeugen, wobei das Zeitschlitzbelegungssignal den belegten Sendezeitschlitz in dem vorbestimmten Sendeintervall anzeigt, und wobei die Kommunikationsschnittstelle ausgebildet ist, das Zeitschlitzbelegungssignal an die weitere Serverentität über das Kommunikationsnetzwerk auszusenden. Dadurch wird der Vorteil erreicht, dass eine effiziente Verwaltung von freien Sendezeitschlitzen und/oder belegten Sendezeitschlitzen realisiert werden kann.

Gemäß einem vierten Aspekt betrifft die Erfindung ein Kommunikationssystem, mit einer Gruppe von Detektionsvorrichtungen, gemäß Anspruch 9.

Gemäß einer Ausführungsform ist jede Detektionsvorrichtung der Gruppe ausgebildet, die Daten jeweils an die Serverentität über das Kommunikationsnetzwerk auszusenden. Dadurch wird der Vorteil erreicht, dass die Daten effizient durch die Serverentität ausgewertet und gespeichert werden können.

Gemäß einer Ausführungsform umfasst das Kommunikationssystem eine weitere Gruppe von Detektionsvorrichtungen, wobei jeder Detektionsvorrichtung der weiteren Gruppe ein Sendezeitschlitz in dem vorbestimmten Sendeintervall oder in einem weiteren Sendeintervall zum Aussenden von Daten zugeordnet ist, und wobei die Sendezeitschlitze unterschiedlich sind, und einer weiteren Serverentität, welche ausgebildet ist, jeder Detektionsvorrichtung der weiteren Gruppe einen Sendezeitschlitz in dem vorbestimmten Sendeintervall oder in dem weiteren Sendeintervall zuzuordnen. Dadurch wird der Vorteil erreicht, dass die freien Sendezeitschlitze der Gruppe sowie die freien Sendezeitschlitze der weiteren Gruppe effizient verwaltet werden können.

Die Serverentität und die weitere Serverentität können über das Kommunikationsnetzwerk miteinander kommunizieren. Die Serverentität und die weitere Serverentität können Zeitschlitzbelegungssignale miteinander austauschen.

Gemäß einer Ausführungsform folgen das Sendeintervall und das weitere Sendeintervall zeitlich aufeinander. Dadurch wird der Vorteil erreicht, dass eine Überlappung der Sendeintervalle und/oder eine Kollision von Daten effizient verhindert werden kann.

Gemäß einer Ausführungsform ist jede Detektionsvorrichtung der weiteren Gruppe ausgebildet, die Daten jeweils an die weitere Serverentität über das Kommunikationsnetzwerk auszusenden. Dadurch wird der Vorteil erreicht, dass die Daten effizient durch die weitere Serverentität ausgewertet und gespeichert werden können.

Gemäß einer Ausführungsform weisen die freien Sendezeitschlitze der Gruppe von Detektionsvorrichtungen jeweils eine Sendezeitschlitzdauer auf, wobei die freien Sendezeitschlitze der weiteren Gruppe von Detektionsvorrichtungen jeweils eine weitere Sendezeitschlitzdauer aufweisen, und wobei die Sendezeitschlitzdauer und die weitere Sendezeitschlitzdauer unterschiedlich sind. Dadurch wird der Vorteil erreicht, dass eine Kapazität des Kommunikationssystems erhöht werden kann.

Gemäß einer Ausführungsform ist das Kommunikationsnetzwerk ein Kommunikationsnetzwerk der fünften Generation (5G) oder einer weiteren Generation, wobei das Kommunikationsnetzwerk ein Subnetzwerk, insbesondere ein Slice, und ein weiteres Subnetzwerk, insbesondere ein weiteres Slice, umfasst, wobei die Gruppe von Detektionsvorrichtungen und die Serverentität dem Subnetzwerk zugeordnet sind, und wobei die weitere Gruppe von Detektionsvorrichtungen und die weitere Serverentität dem weiteren Subnetzwerk zugeordnet sind. Dadurch wird der Vorteil erreicht, dass eine effiziente Übertragung der Daten über ein Kommunikationsnetzwerk der fünften Generation (5G) oder einer weiteren Generation realisiert werden kann.

Gemäß einem fünften Aspekt betrifft die Erfindung ein Verfahren gemäß Anspruch 12.

Dadurch wird der Vorteil erreicht, dass ein effizientes Konzept zur Medienzugriffssteuerung auf einem Kommunikationskanal realisiert werden kann.

Das Verfahren wird durch die Detektionsvorrichtung ausgeführt. Weitere Merkmale des Verfahrens ergeben sich unmittelbar aus der Funktionalität und/oder den Merkmalen der Detektionsvorrichtung.

Beschrieben wird weiterhin ein nicht beanspruchtes Verfahren zum Zuordnen eines Sendezeitschlitzes eines vorbestimmten Sendeintervalls zu einer Detektionsvorrichtung einer Gruppe von Detektionsvorrichtungen für die Kommunikation über ein Kommunikationsnetzwerk unter Verwendung einer Serverentität, wobei die Serverentität eine Kommunikationsschnittstelle und einen Prozessor umfasst, mit einem Aussenden eines Broadcastsignals an die Detektionsvorrichtung durch die Kommunikationsschnittstelle, wobei das Broadcastsignal eine Belegung von Sendezeitschlitzen in dem vorbestimmten Sendeintervall durch Zuordnung von Identitätskennungen von Detektionsvorrichtungen zu Sendezeitschlitzen anzeigt, wobei das vorbestimmte Sendeintervall zumindest einen freien Sendezeitschlitz aufweist, welchem keine Identitätskennung zugeordnet ist, einem Empfangen von Daten von der Detektionsvorrichtung in dem freien Sendezeitschlitz durch die Kommunikationsschnittstelle, und einem Zuordnen des freien Sendezeitschlitzes zu der Detektionsvorrichtung durch den Prozessor. Dadurch wird der Vorteil erreicht, dass ein effizientes Konzept zur Medienzugriffssteuerung auf einem Kommunikationskanal realisiert werden kann.

Das Verfahren kann durch die Serverentität ausgeführt werden. Weitere Merkmale des Verfahrens ergeben sich unmittelbar aus der Funktionalität und/oder den Merkmalen der Serverentität.

Gemäß einem siebten Aspekt betrifft die Erfindung ein Computerprogramm mit einem Programmcode zum Ausführen des Verfahrens zum Detektieren einer physikalischen Größe, gemäß Anspruch 13, wenn der Programmcode auf einem Computer ausgeführt wird. Dadurch wird der Vorteil erreicht, dass die Verfahren automatisiert ausgeführt werden können.

Die Detektionsvorrichtung und/oder die Serverentität können programmtechnisch eingerichtet sein, um den Programmcode auszuführen.

Die Erfindung kann in Hardware und/oder in Software realisiert werden.

### BESCHREIBUNG DER FIGUREN

Weitere Ausführungsbeispiele werden bezugnehmend auf die beiliegenden Zeichnungen näher erläutert. Es zeigen:
Fig. 1 ein schematisches Diagramm einer Detektionsvorrichtung zum Detektieren einer physikalischen Größe gemäß einer Ausführungsform;
Fig. 2 ein schematisches Diagramm einer Gruppe von Detektionsvorrichtungen zum Detektieren einer physikalischen Größe gemäß einer Ausführungsform;
Fig. 3 ein schematisches Diagramm einer Serverentität gemäß einer Ausführungsform;
Fig. 4 ein schematisches Diagramm eines Kommunikationssystems gemäß einer Ausführungsform;
Fig. 5 ein schematisches Diagramm eines Verfahrens zum Detektieren einer physikalischen Größe unter Verwendung einer Detektionsvorrichtung gemäß einer Ausführungsform;
Fig. 6 ein schematisches Diagramm eines Verfahrens zum Zuordnen eines Sendezeitschlitzes zu einer Detektionsvorrichtung unter Verwendung einer Serverentität gemäß einer Ausführungsform;
Fig. 7 ein schematisches Diagramm einer Detektionsvorrichtung zum Detektieren einer physikalischen Größe gemäß einer Ausführungsform;
Fig. 8 ein schematisches Diagramm eines Kommunikationssystems gemäß einer Ausführungsform;
Fig. 9 ein schematisches Diagramm eines Sendeintervalls mit einer Mehrzahl von Sendezeitschlitzen gemäß einer Ausführungsform;
Fig. 10 ein schematisches Diagramm eines Broadcastsignals, welches in einem Broadcastzeitschlitz angeordnet ist, gemäß einer Ausführungsform;
Fig. 11 ein schematisches Diagramm eines Kommunikationssystems gemäß einer Ausführungsform;
Fig. 12 ein schematisches Diagramm eines Kommunikationssystems gemäß einer Ausführungsform;
Fig. 13 ein schematisches Diagramm eines Signalformats zum Aussenden von Daten mit einer Identitätskennung einer Detektionsvorrichtung;
Fig. 14 ein schematisches Diagramm eines vorbestimmten Sendeintervalls mit Sendezeitschlitzen; und
Fig. 15 ein schematisches Diagramm eines vorbestimmten Sendeintervalls mit Sendezeitschlitzen.

### DETAILIERTE BESCHREIBUNG DER FIGUREN

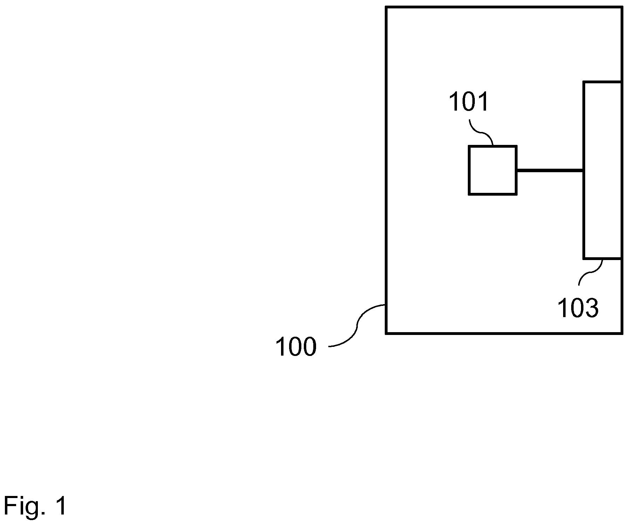

Fig. 1 zeigt ein schematisches Diagramm einer Detektionsvorrichtung 100 zum Detektieren einer physikalischen Größe gemäß einer Ausführungsform.

Die Detektionsvorrichtung 100 ist einer Gruppe von Detektionsvorrichtungen 100 zugeordnet, wobei jeder Detektionsvorrichtung 100 der Gruppe von Detektionsvorrichtungen 100 eine Identitätskennung zugeordnet ist. Die Gruppe von Detektionsvorrichtungen 100 ist ausgebildet, über ein Kommunikationsnetzwerk mit einer Serverentität zu kommunizieren.

Die Detektionsvorrichtung 100 umfasst einen Detektor 101 zum Detektieren der physikalischen Größe, wobei der Detektor 101 ausgebildet ist, Daten auszugeben, welche die physikalische Größe repräsentieren. Die Detektionsvorrichtung 100 umfasst ferner eine Kommunikationsschnittstelle 103, welche ausgebildet ist, ein Broadcastsignal von der Serverentität über das Kommunikationsnetzwerk zu empfangen, wobei das Broadcastsignal eine Belegung von Sendezeitschlitzen in einem vorbestimmten Sendeintervall durch Zuordnung von Identitätskennungen von Detektionsvorrichtungen zu Sendezeitschlitzen anzeigt. Die Kommunikationsschnittstelle 103 ist ausgebildet, einen freien Sendezeitschlitz des vorbestimmten Sendeintervalls auszuwählen, falls keinem Sendezeitschlitz die Identitätskennung der Detektionsvorrichtung zugeordnet ist. Die Kommunikationsschnittstelle 103 ist ferner ausgebildet, die Daten in dem ausgewählten Sendezeitschlitz über das Kommunikationsnetzwerk an die Serverentität auszusenden.

Die Detektionsvorrichtung 100 kann ferner einen Zeitgeber, insbesondere eine Echtzeituhr, zum Bereitstellen eines Zeitsignals umfassen. Das Zeitsignal zeigt eine Zeitdifferenz zwischen einem gegenwärtigen Zeitpunkt und einem vorbestimmten Referenzzeitpunkt an. Die Kommunikationsschnittstelle 103 ist ausgebildet, einen Beginn des ausgewählten Sendezeitschlitzes auf der Basis des Zeitsignals zu bestimmen.

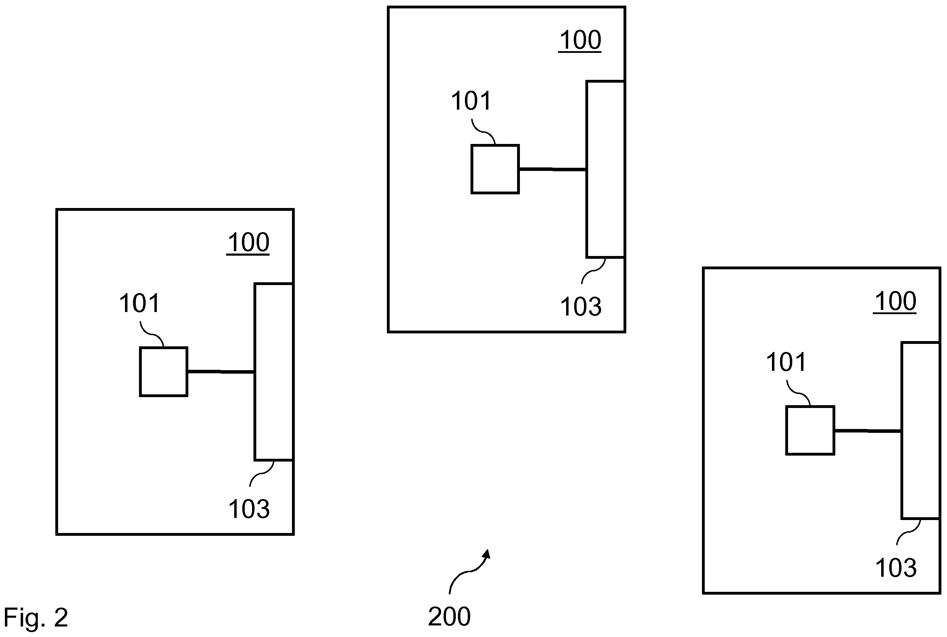

Fig. 2 zeigt ein schematisches Diagramm einer Gruppe 200 von Detektionsvorrichtungen 100 zum Detektieren einer physikalischen Größe gemäß einer Ausführungsform.

Jeder Detektionsvorrichtung 100 ist jeweils eine Identitätskennung zugeordnet. Jede Detektionsvorrichtung 100 umfasst jeweils einen Detektor 101 und eine Kommunikationsschnittstelle 103. Jeder Detektionsvorrichtung 100 ist jeweils ein Sendezeitschlitz in einem vorbestimmten Sendeintervall zum Aussenden von Daten zugeordnet. Die Sendezeitschlitze sind unterschiedlich.

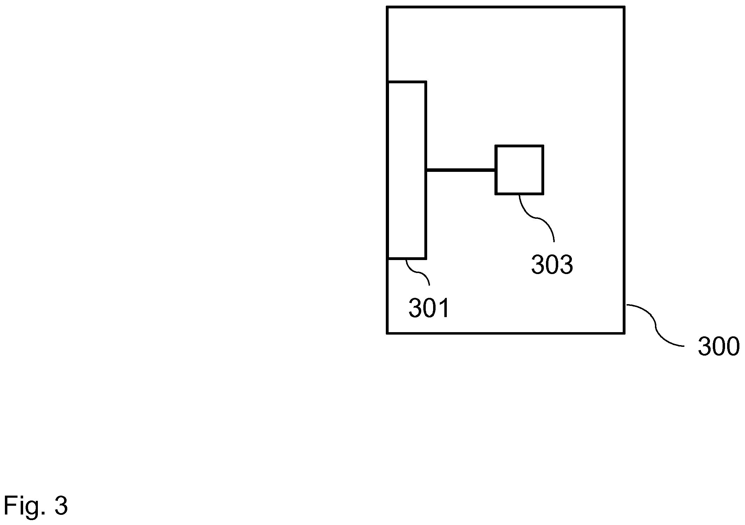

Fig. 3 zeigt ein schematisches Diagramm einer Serverentität 300 gemäß einer Ausführungsform. Die Serverentität 300 ist ausgebildet, einen Sendezeitschlitz eines vorbestimmten Sendeintervalls zu einer Detektionsvorrichtung einer Gruppe von Detektionsvorrichtungen für die Kommunikation über ein Kommunikationsnetzwerk zuzuordnen.

Die Serverentität 300 umfasst eine Kommunikationsschnittstelle 301, welche ausgebildet ist, ein Broadcastsignal an die Detektionsvorrichtung auszusenden, wobei das Broadcastsignal eine Belegung von Sendezeitschlitzen in dem vorbestimmten Sendeintervall durch Zuordnung von Identitätskennungen von Detektionsvorrichtungen zu Sendezeitschlitzen anzeigt, wobei das vorbestimmte Sendeintervall zumindest einen freien Sendezeitschlitz aufweist, welchem keine Identitätskennung zugeordnet ist. Die Kommunikationsschnittstelle 301 ist ferner ausgebildet, Daten von der Detektionsvorrichtung in dem freien Sendezeitschlitz zu empfangen. Die Serverentität 300 umfasst ferner einen Prozessor 303, welcher ausgebildet ist, den freien Sendezeitschlitz der Detektionsvorrichtung zuzuordnen.

Der Prozessor 303 kann ausgebildet sein, ein weiteres Broadcastsignal zu erzeugen, wobei das weitere Broadcastsignal eine Zuordnung der Identitätskennung der Detektionsvorrichtung zu dem freien Sendezeitschlitz anzeigt. Die Kommunikationsschnittstelle 301 kann ausgebildet sein, das weitere Broadcastsignal an die Detektionsvorrichtung auszusenden.

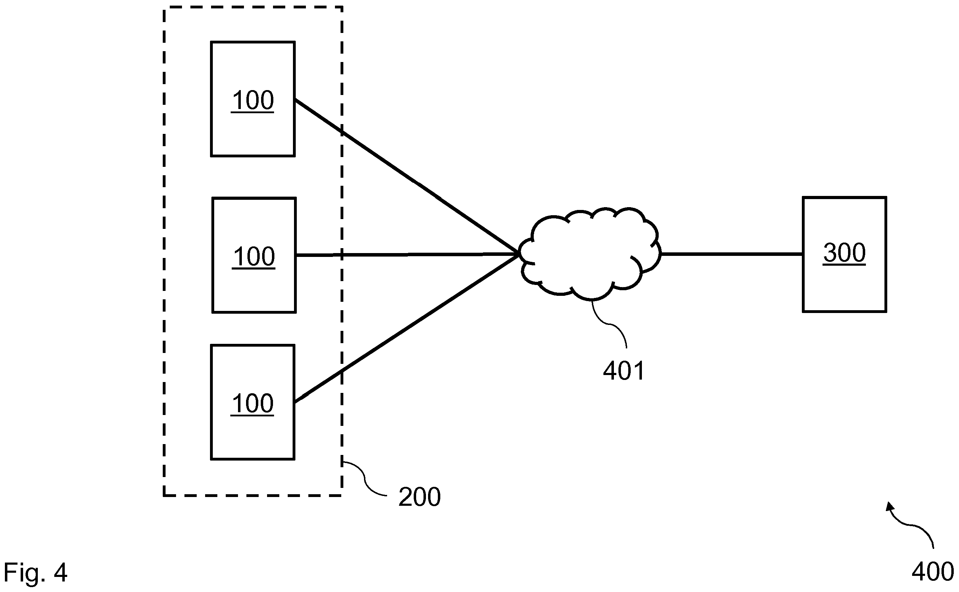

Fig. 4 zeigt ein schematisches Diagramm eines Kommunikationssystems 400 gemäß einer Ausführungsform.

Das Kommunikationssystem 400 umfasst eine Gruppe 200 von Detektionsvorrichtungen 100, wobei jeder Detektionsvorrichtung 100 der Gruppe 200 ein Sendezeitschlitz in einem vorbestimmten Sendeintervall zum Aussenden von Daten zugeordnet ist, und wobei die Sendezeitschlitze unterschiedlich sind. Das Kommunikationssystem 400 umfasst ferner eine Serverentität 300, welche ausgebildet ist, jeder Detektionsvorrichtung 100 der Gruppe 200 einen Sendezeitschlitz in dem vorbestimmten Sendeintervall zuzuordnen.

Die Gruppe 200 von Detektionsvorrichtungen 100 kann mit der Serverentität 300 über ein Kommunikationsnetzwerk 401 kommunizieren.

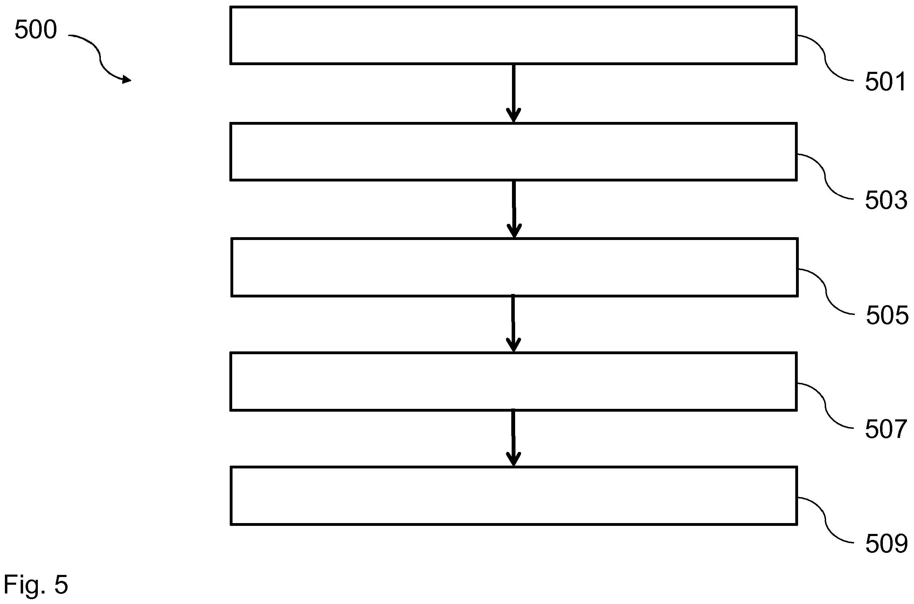

Fig. 5 zeigt ein schematisches Diagramm eines Verfahrens 500 zum Detektieren einer physikalischen Größe unter Verwendung einer Detektionsvorrichtung gemäß einer Ausführungsform. Die Detektionsvorrichtung umfasst einen Detektor und eine Kommunikationsschnittstelle.

Die Detektionsvorrichtung ist einer Gruppe von Detektionsvorrichtungen zugeordnet, wobei jeder Detektionsvorrichtung der Gruppe von Detektionsvorrichtungen eine Identitätskennung zugeordnet ist. Die Gruppe von Detektionsvorrichtungen ist ausgebildet, über ein Kommunikationsnetzwerk mit einer Serverentität zu kommunizieren.

Das Verfahren 500 umfasst ein Detektieren 501 der physikalischen Größe durch den Detektor, ein Ausgeben 503 von Daten durch den Detektor, welche die physikalische Größe repräsentieren, ein Empfangen 505 eines Broadcastsignals von der Serverentität über das Kommunikationsnetzwerk durch die Kommunikationsschnittstelle, wobei das Broadcastsignal eine Belegung von Sendezeitschlitzen in einem vorbestimmten Sendeintervall durch Zuordnung von Identitätskennungen von Detektionsvorrichtungen zu Sendezeitschlitzen anzeigt, ein Auswählen 507 eines freien Sendezeitschlitzes des vorbestimmten Sendeintervalls durch die Kommunikationsschnittstelle, falls keinem Sendezeitschlitz die Identitätskennung der Detektionsvorrichtung zugeordnet ist, und ein Aussenden 509 der Daten in dem ausgewählten Sendezeitschlitz über das Kommunikationsnetzwerk an die Serverentität durch die Kommunikationsschnittstelle.

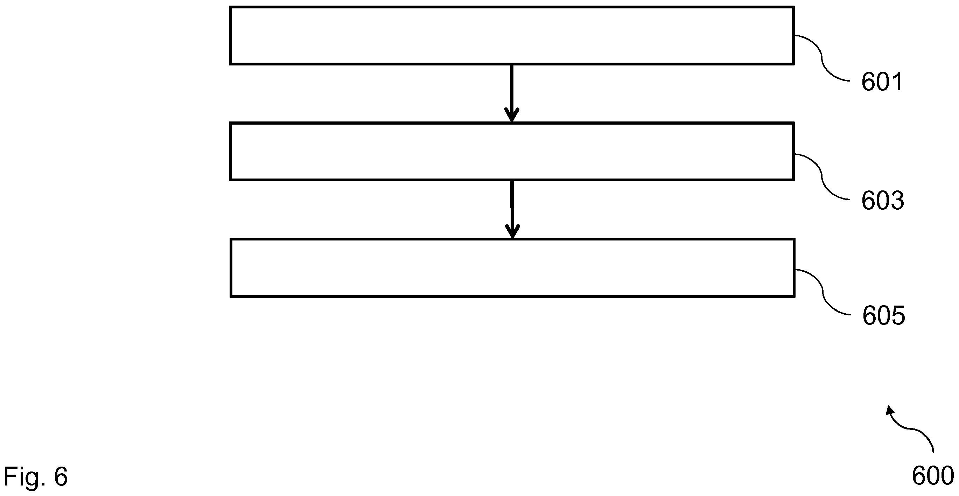

Fig. 6 zeigt ein schematisches Diagramm eines Verfahrens 600 zum Zuordnen eines Sendezeitschlitzes eines vorbestimmten Sendeintervalls zu einer Detektionsvorrichtung einer Gruppe von Detektionsvorrichtungen für die Kommunikation über ein Kommunikationsnetzwerk unter Verwendung einer Serverentität gemäß einer Ausführungsform. Die Serverentität umfasst eine Kommunikationsschnittstelle und einen Prozessor.

Das Verfahren 600 umfasst ein Aussenden 601 eines Broadcastsignals an die Detektionsvorrichtung durch die Kommunikationsschnittstelle, wobei das Broadcastsignal eine Belegung von Sendezeitschlitzen in dem vorbestimmten Sendeintervall durch Zuordnung von Identitätskennungen von Detektionsvorrichtungen zu Sendezeitschlitzen anzeigt, wobei das vorbestimmte Sendeintervall zumindest einen freien Sendezeitschlitz aufweist, welchem keine Identitätskennung zugeordnet ist, ein Empfangen 603 von Daten von der Detektionsvorrichtung in dem freien Sendezeitschlitz durch die Kommunikationsschnittstelle, und ein Zuordnen 605 des freien Sendezeitschlitzes zu der Detektionsvorrichtung durch den Prozessor.

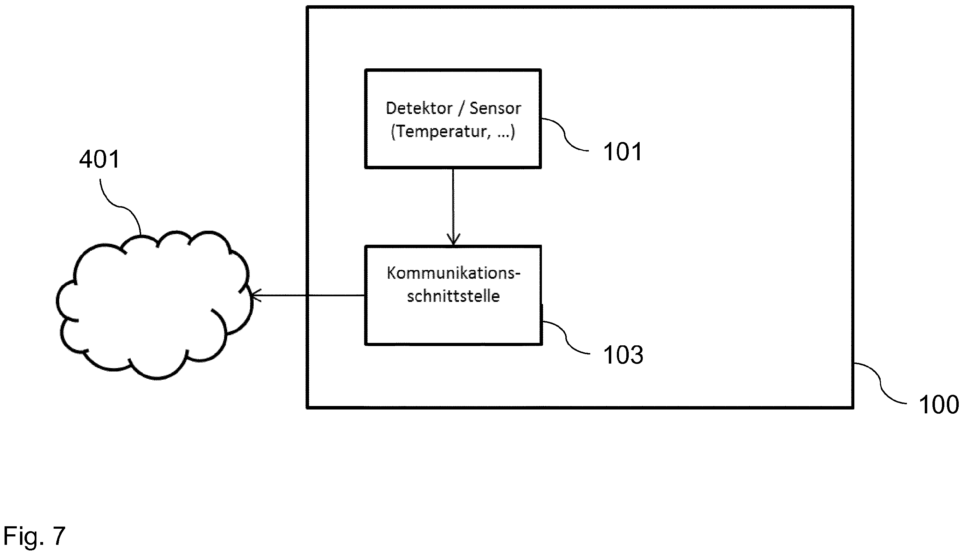

Fig. 7 zeigt ein schematisches Diagramm einer Detektionsvorrichtung 100 zum Detektieren einer physikalischen Größe gemäß einer Ausführungsform.

Die Detektionsvorrichtung 100 ist einer Gruppe von Detektionsvorrichtungen 100 zugeordnet, wobei jeder Detektionsvorrichtung 100 der Gruppe von Detektionsvorrichtungen 100 eine Identitätskennung zugeordnet ist. Die Gruppe von Detektionsvorrichtungen 100 ist ausgebildet, über ein Kommunikationsnetzwerk 401 mit einer Serverentität zu kommunizieren.

Die Detektionsvorrichtung 100 umfasst einen Detektor 101 zum Detektieren der physikalischen Größe, wobei der Detektor 101 ausgebildet ist, Daten auszugeben, welche die physikalische Größe repräsentieren. Die Detektionsvorrichtung 100 umfasst ferner eine Kommunikationsschnittstelle 103, welche ausgebildet ist, ein Broadcastsignal von der Serverentität über das Kommunikationsnetzwerk 401 zu empfangen, wobei das Broadcastsignal eine Belegung von Sendezeitschlitzen in einem vorbestimmten Sendeintervall durch Zuordnung von Identitätskennungen von Detektionsvorrichtungen zu Sendezeitschlitzen anzeigt. Die Kommunikationsschnittstelle 103 ist ausgebildet, einen freien Sendezeitschlitz des vorbestimmten Sendeintervalls auszuwählen, falls keinem Sendezeitschlitz die Identitätskennung der Detektionsvorrichtung zugeordnet ist. Die Kommunikationsschnittstelle 103 ist ferner ausgebildet, die Daten in dem ausgewählten Sendezeitschlitz über das Kommunikationsnetzwerk 401 an die Serverentität auszusenden.

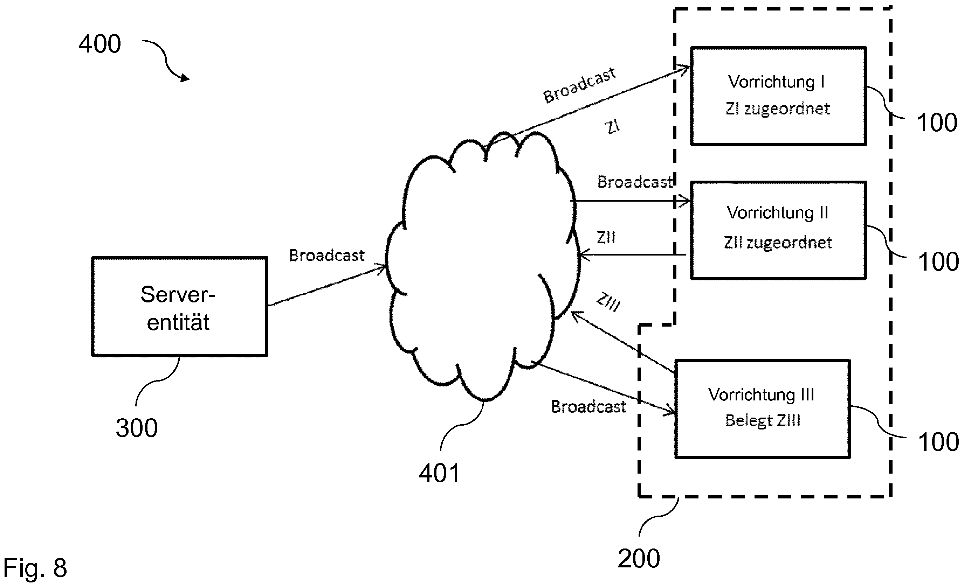

Fig. 8 zeigt ein schematisches Diagramm eines Kommunikationssystems 400 gemäß einer Ausführungsform.

Das Kommunikationssystem 400 umfasst eine Gruppe 200 von Detektionsvorrichtungen 100, wobei jeder Detektionsvorrichtung 100 der Gruppe 200 ein Sendezeitschlitz in einem vorbestimmten Sendeintervall zum Aussenden von Daten zugeordnet ist, und wobei die Sendezeitschlitze unterschiedlich sind. Das Kommunikationssystem 400 umfasst ferner eine Serverentität 300, welche ausgebildet ist, jeder Detektionsvorrichtung 100 der Gruppe 200 einen Sendezeitschlitz in dem vorbestimmten Sendeintervall zuzuordnen. Die Gruppe 200 von Detektionsvorrichtungen 100 kann mit der Serverentität 300 über ein Kommunikationsnetzwerk 401 kommunizieren. Die Serverentität 300 ist ausgebildet, ein Broadcastsignal an die Detektionsvorrichtungen 100 der Gruppe 200 auszusenden.

Das vorbestimmte Sendeintervall umfasst drei Sendezeitschlitze ZI, ZII und ZIII, wobei der Sendezeitschlitz ZI der ersten Detektionsvorrichtung 100 zugeordnet ist, wobei der Sendezeitschlitz ZII der zweiten Detektionsvorrichtung 100 zugeordnet ist, und wobei der Sendezeitschlitz ZIII von der dritten Detektionsvorrichtung 100 belegt ist.

Der Zugriff auf den Kommunikationskanal wird mithin auf der Basis eines Media Access Control (MAC) Tokens geregelt. Hierfür sendet die Serverentität 300, welche eine Basisstation oder ein Controller sein kann, beispielsweise in einem Broadcastzeitschlitz 0 per Broadcastsignal an die Detektionsvorrichtungen 100 der Gruppe 200 eine Angabe über Sendezeitschlitze in einem folgenden Sendeintervall, in welchem die Detektionsvorrichtungen 100 ihre Daten an die Serverentität 300 übermitteln können. In dem Broadcastzeitschlitz 0 ist beispielsweise die bereits erfolgte Belegung der Sendezeitschlitze durch vorhandene Detektionsvorrichtungen 100 genannt. Beispielsweise ist der zweiten Detektionsvorrichtung 100 der Sendezeitschlitz ZII zugeordnet.

Kommt eine Detektionsvorrichtung 100 hinzu, beispielsweise nach einem Aufwachen aus einem Ruhezustand, so kann sie Daten in einem freien Sendezeitschlitz, beispielsweise Sendezeitschlitz ZV, an die Serverentität 300 übermitteln. Diese sendet dann in dem darauffolgenden Broadcastsignal im Broadcastzeitschlitz 0 die feste Zuordnung der neu hinzugekommenen Detektionsvorrichtung 100 zum Sendezeitschlitz ZV aus. Dadurch werden die Sendezeitschlitze den Detektionsvorrichtungen 100 der Gruppe 200 sukzessive zugeordnet.

Das Broadcastsignal kann ferner für jeden Sendezeitschlitz, und damit auch für jede Detektionsvorrichtung 100 der Gruppe 200, welche einem Sendezeitschlitz zugeordnet ist, weitere Informationen an die Detektionsvorrichtungen 100 übermitteln.

Beispielsweise kann für jeden Sendezeitschlitz eine Sequenznummer übermittelt werden. Damit kann beispielsweise eine Angabe über die Belegung der Sendezeitschlitze durch die Detektionsvorrichtungen 100 angezeigt werden. Ferner kann eine Menge von Daten, insbesondere eine Anzahl empfangener Datenpakete, für die jeweiligen Sendezeitschlitze angezeigt werden.

Zudem kann für jeden Sendezeitschlitz eine tatsächliche Belegung pro Anzahl der Sendeintervalle angezeigt werden. Auf diese Weise kann beispielsweise festgestellt werden, ob eine Detektionsvorrichtung 100 Daten in einem bestimmten Sendezeitschlitz in jedem Sendeintervall oder in jedem x-ten Sendeintervall, beispielsweise jedem zweiten Sendeintervall, übermittelt. Diese Information kann per Broadcastsignal an alle Detektionsvorrichtungen 100 der Gruppe 200 übermittelt werden. Die Detektionsvorrichtungen 100 können dadurch dynamisch die unbenutzten, jedoch einer anderen Detektionsvorrichtung 100 zugeordneten Sendezeitschlitze belegen.

Die Serverentität 300 kann auf diese Weise beispielsweise eine Zeiteinteilung (engl. time sharing) der Sendezeitschlitze zwischen zwei Detektionsvorrichtungen 100 festlegen, wonach die Detektionsvorrichtungen 100 beispielsweise abwechselnd in demselben Sendezeitschlitz einer Mehrzahl von Sendeintervallen Daten übermitteln. Dadurch wird eine verbesserte Einteilung der Ressourcen erreicht.

Aufgrund der Zuordnung der Sendezeitschlitze zu den Detektionsvorrichtungen 100 kann die Serverentität 300 im Broadcastzeitschlitz 0 ferner Steuersignale an die Detektionsvorrichtungen 100 der Gruppe 200 übermitteln, um beispielsweise eine Freigabe zu erteilen, dass die Detektionsvorrichtungen 100 selbständig freie und/oder unbelegte Sendezeitschlitze bei Bedarf belegen können.

Die Detektionsvorrichtungen 100 können ferner selbst entscheiden, ob sie ihre Daten in den Sendezeitschlitzen nur an die Serverentität 300 oder ebenfalls per Broadcast an alle Detektionsvorrichtungen 100 derselben Gruppe 200 übermitteln.

Dadurch wird eine einfache Selbstorganisation der Detektionsvorrichtungen 100 der Gruppe 200 ermöglicht. Die Detektionsvorrichtungen 100 der Gruppe 200 können in den ihnen nicht zugeordneten Sendezeitschlitzen auf Empfang gestellt werden. Die Kommunikation zwischen jeder Detektionsvorrichtung 100 der Gruppe 200 und der Serverentität 300 kann schmalbandig sein, d.h. mit sehr geringer Datenrate erfolgen.

Das Kommunikationsnetzwerk 401 kann ein drahtloses Kommunikationsnetzwerk oder ein drahtgebundenes Kommunikationsnetzwerk sein. Die Kommunikation kann beispielsweise unter Verwendung eines IEEE 802.11 Kommunikationsstandards (Wireless Local Area Network, WLAN), eines IEEE 802.15.1 Kommunikationsstandards (Bluetooth), eines DSL Kommunikationsstandards oder eines 3GPP Kommunikationsstandards erfolgen. Insbesondere kann die Kommunikation unter Verwendung eines Mobilfunkstandards der fünften Generation (5G) oder einer weiteren Generation durchgeführt werden.

Zusammenfassend kann eine dezentrale Steuerung des Zugriffs auf einen Kommunikationskanal realisiert werden. Es ergeben sich hierdurch mehrere Vorteile. Das Kommunikationssystem 400 kann kostengünstig implementiert werden. Zugleich können Kollisionen der Daten auf dem Kommunikationskanal vermieden werden. Das Kommunikationssystem 400 ermöglicht eine hohe Volumendatenrate, wodurch eine hohe Anzahl von Detektionsvorrichtungen unterstützt werden kann. Für die Kommunikation über das Kommunikationsnetzwerk 401 kann auf einen Rückkanal verzichtet werden. Ferner sind keine Bestätigungssignale (engl. Acknowledgements, ACKs) erforderlich. Für die Übertragung der Daten über das Kommunikationsnetzwerk 401 ist gegebenenfalls ein Kommunikationskanal ausreichend. Ferner kann eine einfache Modulation, beispielsweise eine Amplitudenmodulation oder eine Phasenmodulation, eingesetzt werden.

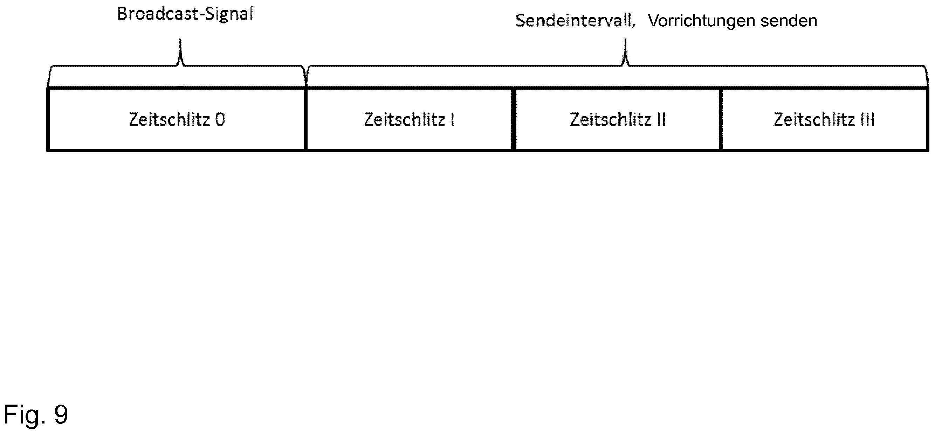

Fig. 9 zeigt ein schematisches Diagramm eines Sendeintervalls mit einer Mehrzahl von Sendezeitschlitzen gemäß einer Ausführungsform.

Das Diagramm zeigt ein Sendeintervall, welches einen Sendezeitschlitz I, einen Sendezeitschlitz II und einen Sendezeitschlitz III umfasst, wobei die Detektionsvorrichtungen der Gruppe in den Sendezeitschlitzen jeweils Daten aussenden. Das Diagramm zeigt ferner einen Broadcastzeitschlitz 0, in welchem das Broadcastsignal angeordnet ist.

Im Broadcastzeitschlitz 0 sendet die Serverentität, welche ein Controller sein kann, das Broadcastsignal aus. In dem Sendeintervall senden die Detektionsvorrichtungen ihre Daten jeweils an die Serverentität aus.

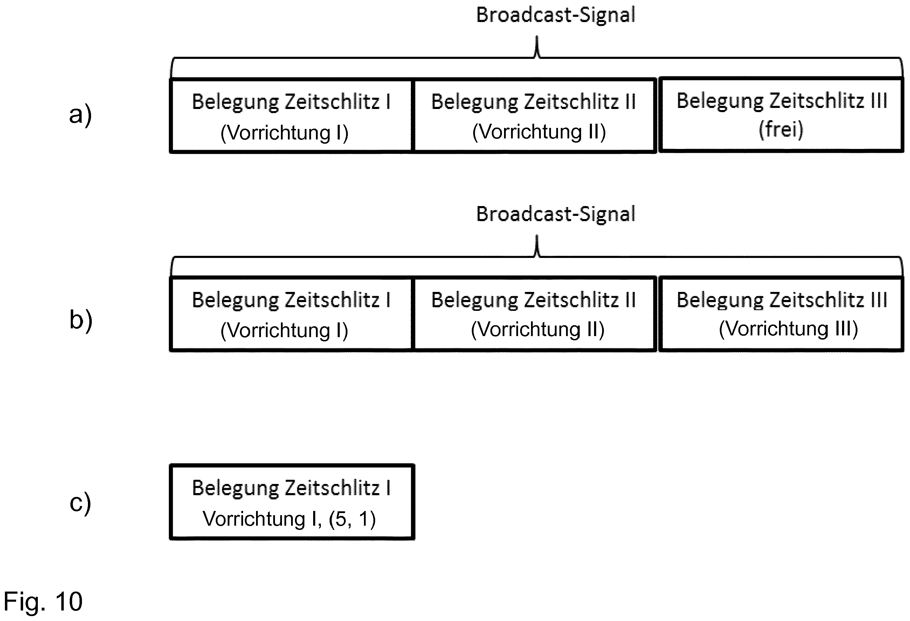

Fig. 10 zeigt ein schematisches Diagramm eines Broadcastsignals, welches in einem Broadcastzeitschlitz angeordnet ist, gemäß einer Ausführungsform.

Das Broadcastsignal weist eine Mehrzahl von Broadcastsignalabschnitten auf, wobei jeder Broadcastsignalabschnitt einem Sendezeitschlitz in dem vorbestimmten Sendeintervall zugeordnet ist.

In Diagramm a) ist eine initiale Zuordnung der Sendezeitschlitze durch das Broadcastsignal gezeigt. Ein erster Sendezeitschlitz ist einer ersten Detektionsvorrichtung zugeordnet, ein zweiter Sendezeitschlitz ist einer zweiten Detektionsvorrichtung zugeordnet, und ein dritter Sendezeitschlitz ist frei. Eine dritte Detektionsvorrichtung kommt beispielsweise hinzu und belegt den freien dritten Sendezeitschlitz, um Daten an die Serverentität zu übermitteln.

In Diagramm b) ist eine Zuordnung der Sendezeitschlitze durch das Broadcastsignal in einer nachfolgenden Broadcastphase gezeigt. Das Broadcastsignal zeigt eine neue Belegung der Sendezeitschlitze an, wobei der dritte Sendezeitschlitz der dritten Detektionsvorrichtung nun fest zugeordnet ist. Die Belegung bzw. Zuordnung der Sendezeitschlitze kann beispielsweise durch Angabe einer Identitätskennung oder einer Netzwerkadresse der jeweiligen Detektionsvorrichtung in dem jeweiligen Broadcastsignalabschnitt erfolgen.

In Diagramm c) ist eine optionale Angabe über eine tatsächliche Belegung der Sendezeitschlitze gezeigt, wobei die Angabe zusätzlich im Broadcastzeitschlitz erfolgt. So kann die Serverentität pro Sendezeitschlitz ein Verhältnis aus Sendeintervallen und tatsächlich belegten Sendezeitschlitzen angeben. Dadurch kann den anderen Detektionsvorrichtungen mitgeteilt werden, dass die erste Detektionsvorrichtung den ersten Sendezeitschlitz beispielsweise alle fünf Sendeintervalle belegt. Der erste Sendezeitschlitz ist somit in den dazwischenliegenden vier Sendeintervallen frei und kann dynamisch durch die anderen Detektionsvorrichtungen belegt werden.

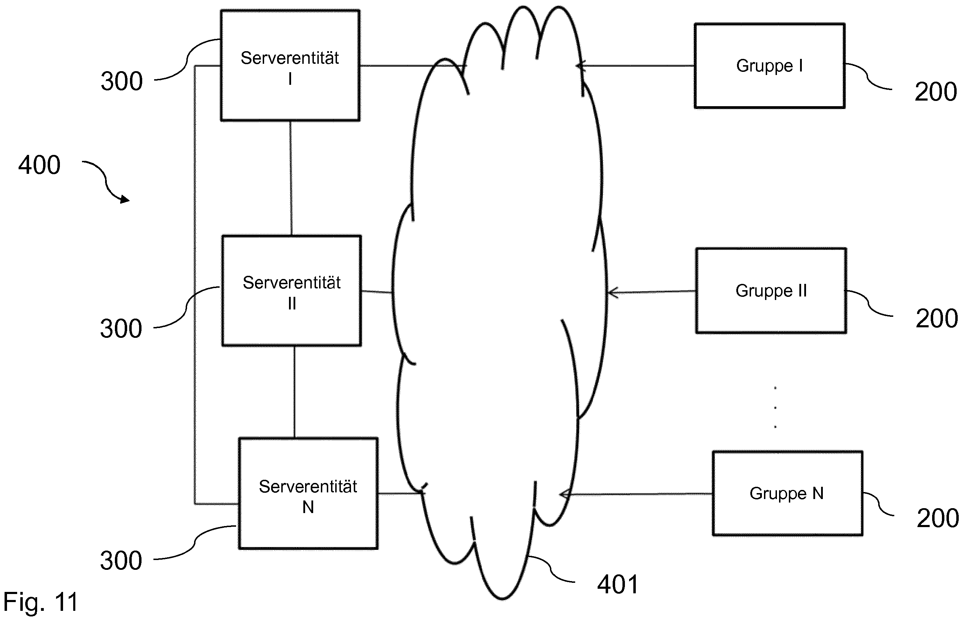

Fig. 11 zeigt ein schematisches Diagramm eines Kommunikationssystems 400 gemäß einer Ausführungsform. Das Kommunikationssystem 400 umfasst eine Mehrzahl von Gruppen 200 von Detektionsvorrichtungen sowie eine Mehrzahl von Serverentitäten 300. Die Mehrzahl von Gruppen 200 von Detektionsvorrichtungen kann mit der Mehrzahl von Serverentitäten 300 über ein Kommunikationsnetzwerk 401 kommunizieren.

Die Gruppen 200 umfassen jeweils Detektionsvorrichtungen. Jeder Gruppe 200 ist eine zugehörige Serverentität 300 zugeordnet. Die Serverentitäten 300 können sich untereinander bezüglich der freien und/oder belegten Sendezeitschlitze unter Verwendung von Zeitschlitzbelegungssignalen synchronisieren. Auf diese Weise werden weitere Kollisionen bei der Kommunikation über das Kommunikationsnetzwerk 401 vermieden. Außerdem wird das Übertragungsmedium im Sinne einer Zeitdiversität effizient genutzt. Dadurch wird die Systemkapazität weiter erhöht. Außerdem können sich die Serverentitäten 300 unter Verwendung der Zeitschlitzbelegungssignale über freie und/oder belegte Sendezeitschlitze austauschen und sich diese gegenseitig zuweisen.

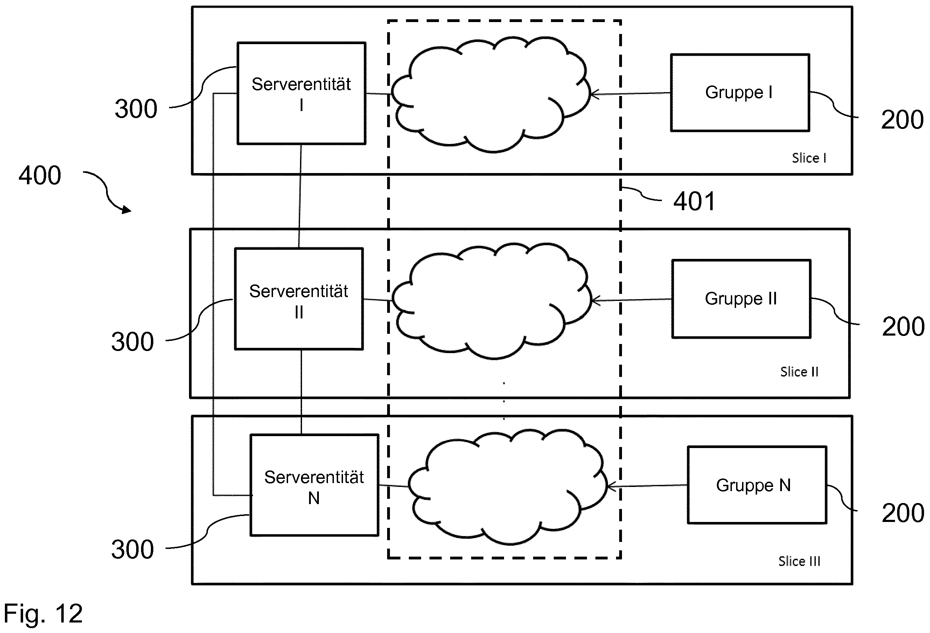

Fig. 12 zeigt ein schematisches Diagramm eines Kommunikationssystems 400 gemäß einer Ausführungsform. Das Kommunikationssystem 400 umfasst eine Mehrzahl von Gruppen 200 von Detektionsvorrichtungen sowie eine Mehrzahl von Serverentitäten 300. Die Mehrzahl von Gruppen 200 von Detektionsvorrichtungen kann mit der Mehrzahl von Serverentitäten 300 über ein Kommunikationsnetzwerk 401 kommunizieren.

Das Kommunikationsnetzwerk 401 umfasst eine Mehrzahl von Subnetzwerken. Jede Gruppe 200 ist mit einer jeweiligen Serverentität 300 einem jeweiligen Subnetzwerk zugeordnet. Das Kommunikationsnetzwerk 401 kann ein Kommunikationsnetzwerk der fünften Generation (5G) oder einer weiteren Generation sein, wobei jedes Subnetzwerk einem Slice des Kommunikationsnetzwerkes 401 zugeordnet ist. Die Kommunikation zwischen den Serverentitäten 300 kann in einer Slice-Managementschicht, welche über der Infrastrukturschicht liegen kann, verwaltet werden.

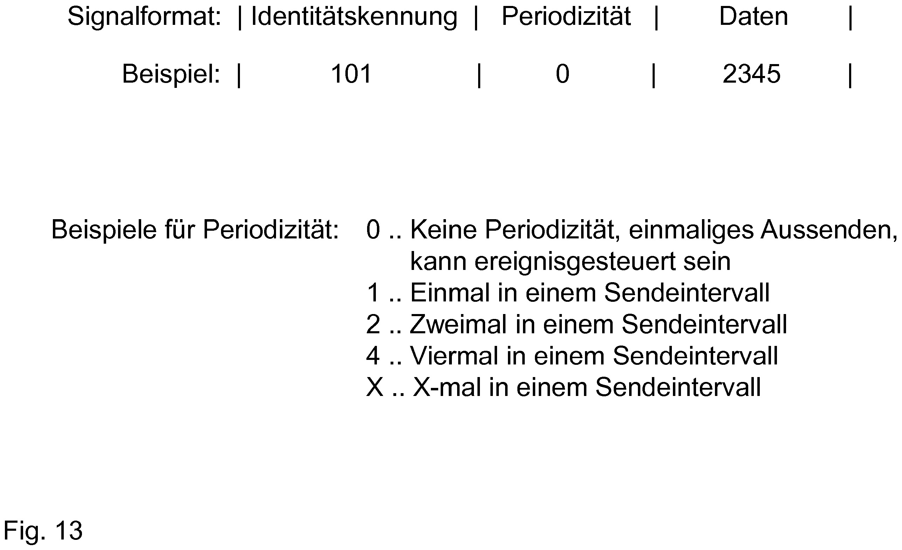

Fig. 13 zeigt ein schematisches Diagramm eines Signalformats zum Aussenden von Daten mit einer Identitätskennung einer Detektionsvorrichtung. Das Signalformat zeigt ferner eine Periodizität zum Aussenden von Daten in Sendeintervallen an.

Die Periodizität kann durch Werte angezeigt werden. Beispielsweise kann ein Wert von 0 anzeigen, dass keine Periodizität, d.h. ein einmaliges Aussenden von Daten, vorliegt. Das einmalige Aussenden kann ereignisgesteuert sein. Ein Wert von 1 kann beispielsweise anzeigen, dass einmal in einem Sendeintervall ausgesendet werden soll. Ein Wert von 2 kann beispielsweise anzeigen, dass zweimal in einem Sendeintervall ausgesendet werden soll. Ein Wert von 4 kann beispielsweise anzeigen, dass viermal in einem Sendeintervall ausgesendet werden soll. Ein Wert von X kann beispielsweise anzeigen, dass X-mal in einem Sendeintervall ausgesendet werden soll.

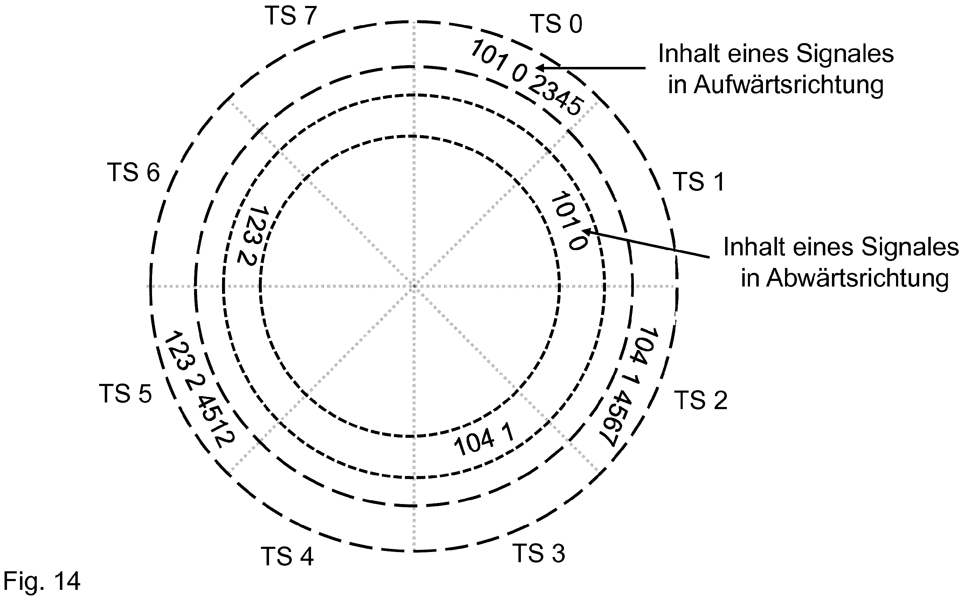

Fig. 14 zeigt ein schematisches Diagramm eines vorbestimmten Sendeintervalls mit Sendezeitschlitzen TS 0 bis TS 7. Der äußere Kreisring zeigt Signale in Aufwärtsrichtung (engl. Uplink). Der innere Kreisring zeigt Signale, insbesondere Broadcastsignale, in Abwärtsrichtung (engl. Downlink). Die Signale sind gemäß dem Signalformat aus Fig. 13 formatiert.

Die Detektionsvorrichtungen können sich in einem Empfangsmodus befinden, soweit sie nicht gerade Daten aussenden. Der Empfang der Daten kann in der Abwärtsrichtung unmittelbar nach dem entsprechenden Sendezeitschlitz durch die Serverentität bestätigt werden. Soweit sich die Detektionsvorrichtungen nicht in einem Sendezustand befinden, können sich die Detektionsvorrichtungen immer in einem Empfangsmodus befinden.

Die Detektionsvorrichtungen können eine Tabelle erzeugen und verwalten, welche belegte und unbelegte Sendezeitschlitze anzeigt. Falls für einen Sendezeitschlitz über mehrere Sendeintervalle hinweg keine Bestätigung durch die Serverentität erfolgt, können die Detektionsvorrichtungen den Sendezeitschlitz wieder als verfügbar oder unbelegt betrachten.

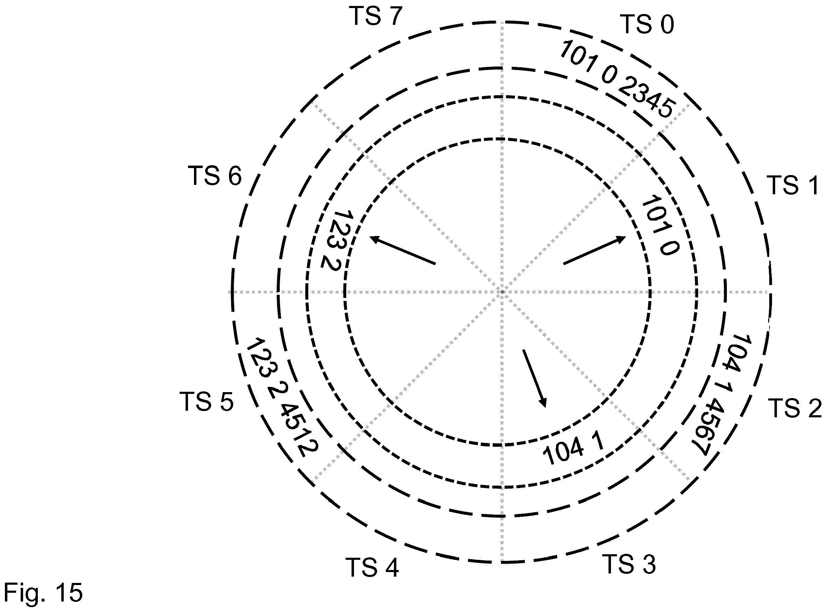

Fig. 15 zeigt ein schematisches Diagramm eines vorbestimmten Sendeintervalls mit Sendezeitschlitzen TS 0 bis TS 7. Der äußere Kreisring zeigt Signale in Aufwärtsrichtung (engl. Uplink). Der innere Kreisring zeigt Signale, insbesondere Broadcastsignale, in Abwärtsrichtung (engl. Downlink). Die Signale sind gemäß dem Signalformat aus Fig. 13 formatiert.

In Sendezeitschlitz TS 1 wurde einer Detektionsvorrichtung mit Identitätskennung 101, welche in Sendezeitschlitz TS 0 gesendet hatte, angezeigt, dass die Daten erfolgreich durch die Serverentität empfangen wurden. Allen anderen Detektionsvorrichtungen wurde damit angezeigt, dass der vorherige Sendezeitschlitz TS 0 gerade einmalig zugeordnet war und als unbelegt in dem folgenden Sendeintervall betrachtet werden kann.

In Sendezeitschlitz TS 3 wurde einer Detektionsvorrichtung mit Identitätskennung 104, welche in Sendezeitschlitz TS 2 gesendet hatte, angezeigt, dass die Daten erfolgreich durch die Serverentität empfangen wurden. Allen anderen Detektionsvorrichtungen wurde damit angezeigt, dass der vorherige Sendezeitschlitz TS 2 in jedem Sendeintervall zugeordnet ist und als belegt in dem folgenden Sendeintervall betrachtet werden kann.

In Sendezeitschlitz TS 6 wurde einer Detektionsvorrichtung mit Identitätskennung 123, welche in Sendezeitschlitz TS 5 gesendet hatte, angezeigt, dass die Daten erfolgreich durch die Serverentität empfangen wurden. Allen anderen Detektionsvorrichtungen wurde damit angezeigt, dass der vorherige Sendezeitschlitz TS 5 in jedem Sendeintervall zugeordnet ist und als belegt in dem folgenden Sendeintervall betrachtet werden kann. Ferner kann die Detektionsvorrichtung mit Identitätskennung 123 beispielsweise in Sendezeitschlitz TS 1 Daten aussenden, wodurch ein weiterer Sendezeitschlitz gemäß der angezeigten Periodizität mit zwei Sendezeitschlitzen in jedem Sendeintervall belegt werden kann.

### BEZUGSZEICHENLISTE

- 100: Detektionsvorrichtung
- 101: Detektor
- 103: Kommunikationsschnittstelle

- 200: Gruppe von Detektionsvorrichtungen

- 300: Serverentität
- 301: Kommunikationsschnittstelle
- 303: Prozessor

- 400: Kommunikationssystem
- 401: Kommunikationsnetzwerk

- 500: Verfahren zum Detektieren einer physikalischen Größe
- 501: Detektieren
- 503: Ausgeben
- 505: Empfangen
- 507: Auswählen
- 509: Aussenden

- 600: Verfahren zum Zuordnen eines Sendezeitschlitzes zu einer Detektionsvorrichtung
- 601: Aussenden
- 603: Empfangen
- 605: Zuordnen

## Patentansprüche

1. Detektionsvorrichtung (100) zum Detektieren einer physikalischen Größe, wobei die Detektionsvorrichtung (100) einer Gruppe (200) von Detektionsvorrichtungen (100) zugeordnet ist, wobei jeder Detektionsvorrichtung (100) der Gruppe (200) von Detektionsvorrichtungen (100) eine Identitätskennung zugeordnet ist, wobei die Gruppe (200) von Detektionsvorrichtungen (100) ausgebildet ist, über ein Kommunikationsnetzwerk (401) mit einer Serverentität (300) zu kommunizieren, mit:
einem Detektor (101) zum Detektieren der physikalischen Größe, wobei der Detektor (101) ausgebildet ist, Daten auszugeben, welche die physikalische Größe repräsentieren;
einer Kommunikationsschnittstelle (103), welche ausgebildet ist, ein Broadcastsignal von der Serverentität (300) über das Kommunikationsnetzwerk (401) zu empfangen, wobei das Broadcastsignal eine Belegung von Sendezeitschlitzen in einem vorbestimmten Sendeintervall durch Zuordnung von Identitätskennungen von Detektionsvorrichtungen (100) zu Sendezeitschlitzen anzeigt, wobei die Kommunikationsschnittstelle (103) ausgebildet ist, einen freien Sendezeitschlitz des vorbestimmten Sendeintervalls auszuwählen, falls keinem Sendezeitschlitz die Identitätskennung der Detektionsvorrichtung (100) zugeordnet ist, und wobei die Kommunikationsschnittstelle (103) ausgebildet ist, die Daten in dem ausgewählten Sendezeitschlitz über das Kommunikationsnetzwerk (401) an die Serverentität (300) auszusenden;
**dadurch gekennzeichnet,**
**dass** die Detektionsvorrichung (100) und die weiteren Detektionsvorrichtungen (100) der Gruppe (200) eingerichtet sind, jeweils die Daten der Detektionsvorrichtung (100) und Daten der weiteren Detektionsvorrichtungen der Gruppe (200) in den Sendezeitschlitzen ebenfalls per Broadcast an alle Detektionsvorrichtungen (100) derselben Gruppe (200) zu senden, wobei die Detektionsvorrichtungen (100) der Gruppe (200) eingerichtet sind in den ihnen nicht zugeordneten Sendezeitschlitzen auf Empfang gestellt zu sein.

2. Detektionsvorrichtung (100) nach Anspruch 1, wobei die Kommunikationsschnittstelle (103) ausgebildet ist, einen belegten Sendezeitschlitz des vorbestimmten Sendeintervalls auszuwählen, falls dem belegten Sendezeitschlitz die Identitätskennung der Detektionsvorrichtung (100) zugeordnet ist.

3. Detektionsvorrichtung (100) nach einem der vorstehenden Ansprüche, wobei das Broadcastsignal eine Mehrzahl von Broadcastsignalabschnitten aufweist, wobei jeder Broadcastsignalabschnitt einem Sendezeitschlitz in dem vorbestimmten Sendeintervall zugeordnet ist, und wobei die Kommunikationsschnittstelle (103) ausgebildet ist, die Mehrzahl von Broadcastsignalabschnitten aus dem Broadcastsignal zu extrahieren.

4. Detektionsvorrichtung (100) nach einem der vorstehenden Ansprüche, wobei der Detektor (101) ausgebildet ist, die Daten mit der Identitätskennung der Detektionsvorrichtung (100) zu verknüpfen, und wobei die Kommunikationsschnittstelle (103) ausgebildet ist, die Daten mit der Identitätskennung der Detektionsvorrichtung (100) in dem ausgewählten Sendezeitschlitz auszusenden.

5. Detektionsvorrichtung (100) nach einem der vorstehenden Ansprüche, wobei der Detektor (101) ausgebildet ist, eine Temperatur, eine Feuchtigkeit, eine Energie, eine Leistung, eine Position, eine Geschwindigkeit, eine Beschleunigung, einen Winkel, eine Winkelgeschwindigkeit, eine Winkelbeschleunigung, eine Drehzahl, eine Kraft, ein Drehmoment, einen Energieverbrauch, einen Wasserverbrauch, einen Wärmeverbrauch oder einen Kraftstoffverbrauch als physikalische Größe zu bestimmen.

6. Detektionsvorrichtung (100) nach einem der vorstehenden Ansprüche, wobei das Kommunikationsnetzwerk (401) eine Mehrzahl von Subnetzwerken umfasst, und wobei die Kommunikationsschnittstelle (103) ausgebildet ist, die Daten über ein Subnetzwerk der Mehrzahl von Subnetzwerken auszusenden.

7. Gruppe (200) von Detektionsvorrichtungen (100) umfassend die Detektionsvorrichtung (100) und die Gruppe (200) von Detektionsvorrichtungen (100) nach einem der Ansprüche 1 bis 6,
wobei jeder Detektionsvorrichtung (100) ein Sendezeitschlitz in einem vorbestimmten Sendeintervall zum Aussenden von Daten zugeordnet ist, und wobei die Sendezeitschlitze unterschiedlich sind.

8. Serverentität (300) zum Zuordnen eines Sendezeitschlitzes eines vorbestimmten Sendeintervalls zu einer Detektionsvorrichtung (100) einer Gruppe (200) von Detektionsvorrichtungen (100) für die Kommunikation über ein Kommunikationsnetzwerk (401), mit:
einer Kommunikationsschnittstelle (301), welche ausgebildet ist, ein Broadcastsignal an die Detektionsvorrichtung (100) auszusenden, wobei das Broadcastsignal eine Belegung von Sendezeitschlitzen in dem vorbestimmten Sendeintervall durch Zuordnung von Identitätskennungen von Detektionsvorrichtungen (100) zu Sendezeitschlitzen anzeigt, wobei das vorbestimmte Sendeintervall zumindest einen freien Sendezeitschlitz aufweist, welchem keine Identitätskennung zugeordnet ist, wobei die Kommunikationsschnittstelle (301) ausgebildet ist, Daten von der Detektionsvorrichtung (100) in dem freien Sendezeitschlitz zu empfangen;
einem Prozessor (303), welcher ausgebildet ist, den freien Sendezeitschlitz der Detektionsvorrichtung (100) zuzuordnen;
**dadurch gekennzeichnet,**
**dass** die Serverentität (300) eingerichtet ist eine Zeiteinteilung der Sendezeitschlitze zwischen zwei Detektionsvorrichtungen (100) festzulegen und die Zeiteinteilung zusätzlich über das Broadcastsignal auszusenden, wonach die zwei Detektionsvorrichtungen (100) abwechselnd in demselben Sendezeitschlitz einer Mehrzahl von Sendeintervallen Daten gemäß der festgelegten Zeiteinteilung übermitteln.

9. Kommunikationssystem (400) umfassend die Detektionsvorrichtung (100) und die weiteren Detektionsvorrichtungen der Gruppe (200) von Detektionsvorrichtungen (100) nach einem der Ansprüche 1 bis 6, wobei jeder Detektionsvorrichtung (100) der Gruppe (200) ein Sendezeitschlitz in einem vorbestimmten Sendeintervall zum Aussenden von Daten zugeordnet ist, und wobei die Sendezeitschlitze unterschiedlich sind; und
einer Serverentität (300) nach Anspruch 8, welche ausgebildet ist, jeder Detektionsvorrichtung (100) der Gruppe (200) einen Sendezeitschlitz in dem vorbestimmten Sendeintervall zuzuordnen.

10. Kommunikationssystem (400) nach Anspruch 9, mit:
einer weiteren Gruppe (200) von Detektionsvorrichtungen (100) nach einem der Ansprüche 1 bis 7, wobei jeder Detektionsvorrichtung (100) der weiteren Gruppe (200) ein Sendezeitschlitz in dem vorbestimmten Sendeintervall oder in einem weiteren Sendeintervall zum Aussenden von Daten zugeordnet ist, und wobei die Sendezeitschlitze unterschiedlich sind; und
einer weiteren Serverentität (300) nach Anspruch 9, welche ausgebildet ist,
jeder Detektionsvorrichtung (100) der weiteren Gruppe (200) einen Sendezeitschlitz in dem vorbestimmten Sendeintervall oder in dem weiteren Sendeintervall zuzuordnen.

11. Kommunikationssystem (400) nach Anspruch 10, wobei das Kommunikationsnetzwerk (401) ein Kommunikationsnetzwerk der fünften Generation (5G), wobei das Kommunikationsnetzwerk (401) ein Subnetzwerk, insbesondere ein Slice, und ein weiteres Subnetzwerk, insbesondere ein weiteres Slice, umfasst, wobei die Gruppe (200) von Detektionsvorrichtungen (100) und die Serverentität (300) dem Subnetzwerk zugeordnet sind, und wobei die weitere Gruppe (200) von Detektionsvorrichtungen (100) und die weitere Serverentität (300) dem weiteren Subnetzwerk zugeordnet sind.

12. Verfahren (500) zum Detektieren einer physikalischen Größe unter Verwendung einer Detektionsvorrichtung (100), wobei die Detektionsvorrichtung (100) einen Detektor (101) und eine Kommunikationsschnittstelle (103) umfasst, wobei die Detektionsvorrichtung (100) einer Gruppe (200) von Detektionsvorrichtungen (100) zugeordnet ist, wobei jeder Detektionsvorrichtung (100) der Gruppe (200) von Detektionsvorrichtungen (100) eine Identitätskennung zugeordnet ist, wobei die Gruppe (200) von Detektionsvorrichtungen (100) ausgebildet ist, über ein Kommunikationsnetzwerk (401) mit einer Serverentität (300) zu kommunizieren, mit:
Detektieren (501) der physikalischen Größe durch den Detektor (101);
Ausgeben (503) von Daten durch den Detektor (101), welche die physikalische Größe repräsentieren;
Empfangen (505) eines Broadcastsignals von der Serverentität (300) über das Kommunikationsnetzwerk (401) durch die Kommunikationsschnittstelle (103), wobei das Broadcastsignal eine Belegung von Sendezeitschlitzen in einem vorbestimmten Sendeintervall durch Zuordnung von Identitätskennungen von Detektionsvorrichtungen (100) zu Sendezeitschlitzen anzeigt;
Auswählen (507) eines freien Sendezeitschlitzes des vorbestimmten Sendeintervalls durch die Kommunikationsschnittstelle (103), falls keinem Sendezeitschlitz die Identitätskennung der Detektionsvorrichtung (100) zugeordnet ist; und
Aussenden (509) der Daten in dem ausgewählten Sendezeitschlitz über das Kommunikationsnetzwerk (401) an die Serverentität (300) durch die Kommunikationsschnittstelle (103),
**dadurch gekennzeichnet,**
**dass** die Detektionsvorrichung (100) und die weiteren Detektionsvorrichtungen (100) der Gruppe (200), jeweils die Daten der Detektionsvorrichtung und Daten der weiteren Detektionsvorrichtungen der Gruppe (200) in den Sendezeitschlitzen ebenfalls per Broadcast an alle Detektionsvorrichtungen (100) derselben Gruppe (200) senden, wobei die Detektionsvorrichtungen (100) der Gruppe (200) in den ihnen nicht zugeordneten Sendezeitschlitzen auf Empfang gestellt sind.

13. Computerprogramm mit einem Programmcode zum Ausführen des Verfahrens (500) nach Anspruch 12, wenn der Programmcode auf einem Computer ausgeführt wird.

## Claims

1. Detection device (100) for detecting a physical variable, wherein the detection device (100) is assigned to a group (200) of detection devices (100), wherein an identifier is assigned to each detection device (100) of the group (200) of detection devices (100), wherein the group (200) of detection devices (100) is designed to communicate with a server entity (300) via a communication network (401), with:
a detector (101) for detecting the physical variable, wherein the detector (101) is designed to output data which represents the physical variable;
a communication interface (103) which is designed to receive a broadcast signal from the server entity (300) via the communication network (401), wherein the broadcast signal indicates occupancy of transmission time slots in a predetermined transmission interval by assigning identifiers of detection devices (100) to transmission time slots, wherein the communication interface (103) is designed to select a free transmission time slot of the predetermined transmission interval if the identifier of the detection device (100) has not been assigned to a transmission time slot, and wherein the communication interface (103) is designed to transmit the data in the selected transmission time slot to the server entity (300) via the communication network (401);
**characterized in that**
the detection device (100) and the further detection devices (100) of the group (200) are configured to send the data of the detection device (100) and data of the further detection devices (100) of the group (200) in the transmission time slots respectively to all detection devices (100) of the same group (200) via broadcast as well, wherein the detection devices (100) of the group (200) are configured to be set to receiving in the transmission time slots that are not assigned to them.

2. Detection device (100) according to Claim 1, wherein the communication interface (103) is designed to select an occupied transmission time slot of the predetermined transmission interval if the identifier of the detection device (100) is assigned to the occupied transmission time slot.

3. Detection device (100) according to one of the preceding claims, wherein the broadcast signal comprises a plurality of broadcast signal segments, wherein each broadcast signal segment is assigned to a transmission time slot in the predetermined transmission interval, and wherein the communication interface (103) is designed to extract the plurality of broadcast signal segments from the broadcast signal.

4. Detection device (100) according to any one of the preceding claims, wherein the detector (101) is designed to link the data with the identifier of the detection device (100), and wherein the communication interface (103) is designed to send the data in the selected transmission time slot with the identifier of the detection device (100).

5. Detection device (100) according to any one of the preceding claims, wherein the detector (101) is designed to determine a temperature, a humidity, an energy, a power, a position, a speed, an acceleration, an angle, an angular velocity, an angular acceleration, are rotating speed, a force, a torque, an energy consumption, a water consumption, a heat consumption or a fuel consumption as a physical variable.

6. Detection device (100) according to any one of the preceding claims, wherein the communication network (401) comprises a plurality of subnetworks, and wherein the communication interface (103) is designed to transmit the data via a subnetwork of the plurality of subnetworks.

7. Group (200) of detection devices (100), comprising the detection device (100) and the group (200) of detection devices (100) according to any one of Claims 1 to 6, wherein a transmission time slot is assigned to each detection device (100) in a predetermined transmission interval for transmitting data, and wherein the transmission time slots are different.

8. Server entity (300) for assigning a transmission time slot of a predetermined transmission interval to a detection device (100) of a group (200) of detection devices (100) for communication via a communication network (401), with:
a communication interface (301) which is designed to transmit a broadcast signal to the detection device (100), wherein the broadcast signal indicates an occupancy of transmission time slots in the predetermined transmission interval by assigning identifiers of detection devices (100) to transmission time slots, wherein the predetermined transmission interval has at least one free transmission time slot to which no identifier has been assigned, wherein the communication interface (301) is designed to receive data from the detection device (100) in the free transmission time slot;
a processor (303) which is designed to assign the free transmission time slot to the detection device (100)
**characterized in that**
the server entity (300) is configured to define a timing division of the transmission time slots between two detection devices (100) and additionally transmit said timing division via the broadcast signal, according to which the two detection systems (100) communicate data according to the defined timing division alternatingly in the same transmission slot of a plurality of transmission intervals.

9. Communication system (400), comprising the detection device (100) and the further detection devices (100) of the group (200) of detection devices (100) according to any one of claims 1 to 6, wherein a transmission time slot is assigned to each detection device (100) of the group (200) for the transmission of data in a predetermined transmission interval, and wherein the transmission time slots are different; and
a server entity (300) according to Claim 8, which is designed to assign one transmission time slot to each detection device (100) of the group (200) in the predetermined transmission interval.

10. Communication system (400) according to Claim 9, with: a further group (200) of detection devices (100) according to any one of Claims 1 to 7, wherein a transmission time slot is assigned to each detection device (100) of the further group (200) in the predetermined transmission interval or in another transmission interval for transmitting data, and wherein the transmission time slots are different; and another server entity (300) according to Claim 9, which is designed to assign a transmission time slot to each detection device (100) of the further group (200) in the predetermined transmission interval or in the further transmission interval.

11. Communication system (400) according to Claim 10, wherein the communication network (401) is a communication network of the fifth generation (5G), wherein the communication network (401) comprises a subnetwork, in particular a slice, and a further subnetwork, in particular a further slice, wherein the group (200) of detection devices (100) and the server entity (300) are assigned to the subnetwork, and wherein the further group (200) of detection devices (100) and the further server entity (300) are assigned to the further subnetwork.

12. Method (500) for detecting a physical variable using a detection device (100), wherein the detection device (100) comprises a detector (101) and a communication interface (103), wherein the detection device (100) is assigned to a group (200) of detection devices (100), wherein an identifier is assigned to each detection device (100) of the group (200) of detection devices (100), wherein the group (200) of detection devices (100) is designed to communicate with a server entity (300) via a communication network (401), comprising:
detecting (501) the physical variable by the detector (101) ;
outputting (503) data which represents the physical variable by the detector (101);
receiving (505) a broadcast signal from the server entity (300) across the communication network (401) via the communication interface (103), wherein the broadcast signal indicates an occupancy of transmission time slots in a predetermined transmission interval by assigning identifiers of detection devices (100) to transmission time slots;
selecting (507) a free transmission time slot of the predetermined transmission interval via the communication interface (103) if the identifier of the detection device (100) has not been assigned to any transmission time slot;
transmitting (509) the data in the selected transmission time slot across the communication network (401) to the server entity (300) via the communication interface (103),
**characterized in that**
the detection device (100) and the further transmission devices (100) of the group (200) each transmit the data of the detection device and data of the further detection devices of the group (200) in the transmission time slots as well by broadcast to all detection devices (100) of the same group (200), wherein the detection devices (100) of the group (200) are set to receiving in the transmission time slots not assigned to them.

13. Computer program having a program code for performing the method (500) according to Claim 12 when the program code is executed on a computer.

## Revendications

1. Dispositif de détection (100) pour détecter une grandeur physique, dans lequel le dispositif de détection (100) est coordonné à un groupe (200) de dispositifs de détection (100), dans lequel une identification est coordonnée à chaque dispositif de détection (100) du groupe (200) de dispositifs de détection (100), dans lequel le groupe (200) de dispositifs de détection (100) est conçu afin de communiquer via un réseau de communication (401) avec une entité de serveur (300), comportant :
un détecteur (101) pour détecter la grandeur physique, dans lequel le détecteur (101) est conçu afin d'émettre des données, qui représentent la grandeur physique ;
une interface de communication (103), qui est conçue afin de recevoir un signal de diffusion provenant de l'entité de serveur (300) via le réseau de communication (401), dans lequel le signal de diffusion affiche une occupation des intervalles de temps d'émission dans un intervalle d'émission prédéterminé en coordonnant des identifications des dispositifs de détection (100) à des intervalles de temps d'émission, dans lequel l'interface de communication (103) est conçue afin de sélectionner un intervalle de temps d'émission libre de l'intervalle d'émission prédéterminé, au cas où aucun intervalle de temps d'émission n'est coordonné à l'identification du dispositif de détection (100) et dans lequel l'interface de communication (103) est conçue afin d'émettre les données dans l'intervalle de temps d'émission sélectionné via le réseau de communication (401) vers l'entité de serveur (300) ;
**caractérisé en ce que**
le dispositif de détection (100) et les autres dispositifs de détection (100) du groupe (200) sont conçus afin d'émettre respectivement les données du dispositif de détection (100) et les données des autres dispositifs de détection du groupe (200) dans les intervalles de temps d'émission également par diffusion vers tous les dispositifs de détection (100) du même groupe (200), dans lequel les dispositifs de détection (100) du groupe (200) sont conçus afin d'être positionnés sur la réception dans les intervalles de temps d'émission qui ne leur sont pas coordonnés.

2. Dispositif de détection (100) selon la revendication 1, dans lequel l'interface de communication (103) est conçue afin de sélectionner un intervalle de temps d'émission prédéterminé, au cas où l'identification du dispositif de détection (100) est coordonnée à l'intervalle de temps d'émission.

3. Dispositif de détection (100) selon une des revendications précédentes, dans lequel le signal de diffusion présente une pluralité de parties de signal de diffusion, dans lequel chaque partie de signal de diffusion est coordonnée à un intervalle de temps d'émission dans l'intervalle d'émission prédéterminé, et dans lequel l'interface de communication (103) est conçue afin d'extraire du signal de diffusion la pluralité de parties de signal de diffusion.

4. Dispositif de détection (100) selon une des revendications précédentes, dans lequel le détecteur (101) est conçu afin d'associer les données avec l'identification du dispositif de détection (100) et dans lequel l'interface de communication (103) est conçue afin d'émettre les données avec l'identification du dispositif de détection (100) dans l'intervalle de temps sélectionné.

5. Dispositif de détection (100) selon une des revendications précédentes, dans lequel le détecteur (101) est conçu afin de déterminer une température, une humidité, une énergie, une puissance, une position, une vitesse, une accélération, un angle, une vitesse angulaire, une accélération angulaire, une vitesse de rotation, une force, un couple de rotation, une consommation d'énergie, une consommation d'eau, une consommation de chaleur ou une consommation de carburant en tant que grandeur physique.

6. Dispositif de détection (100) selon une des revendications précédentes, dans lequel le réseau de communication (401) comprend une pluralité de sous-réseaux, et dans lequel l'interface de communication (103) est conçue afin d'émettre les données via un sous-réseau de la pluralité de sous-réseaux.

7. Groupe (200) de dispositifs de détection (100) comprenant le dispositif de détection (100) et le groupe (200) de dispositifs de détection (100) selon une des revendications 1 à 6, dans lequel à chaque dispositif de détection (100) est coordonné un intervalle de temps d'émission dans un intervalle de temps prédéterminé pour émettre des données, et dans lequel les intervalles de temps d'émission sont différents.

8. Entité de serveur (300) pour coordonner un intervalle de temps d'émission d'un intervalle de temps prédéterminé à un dispositif de détection (100) d'un groupe (200) de dispositifs de détection (100) en vue de la communication via un réseau de communication (401), comportant :
une interface de communication (301), qui est conçue afin d'émettre un signal de diffusion vers le dispositif de détection (100), dans laquelle le signal de diffusion affiche une occupation des intervalles de temps d'émission dans l'intervalle d'émission prédéterminé en coordonnant des identifications des dispositifs de détection (100) à des intervalles de temps d'émission, dans laquelle l'intervalle de temps prédéterminé présente au moins un intervalle de temps d'émission libre, auquel aucune identification n'est coordonnée, dans laquelle l'interface de communication (301) est conçue afin de recevoir les données provenant du dispositif de détection (100) dans l'intervalle de temps d'émission libre ;
un processeur (303), qui est conçu afin de coordonner l'intervalle de temps d'émission libre au dispositif de détection (100) ;
**caractérisé en ce que**
l'entité de serveur (300) est conçue afin d'établir une synchronisation temporelle des intervalles de temps d'émission entre deux dispositifs de détection (100) et d'émettre en outre la synchronisation temporelle via le signal de diffusion, après quoi les deux dispositifs de détection (100) transmettent en alternance dans le même intervalle de temps d'émission d'une pluralité d'intervalles de temps d'émission des données selon la synchronisation temporelle établie.

9. Système de communication (400) comprenant le dispositif de détection (100) et les autres dispositifs de détection du groupe (200) de dispositifs de détection (100) selon une des revendications 1 à 6, dans lequel à chaque dispositif de détection (100) du groupe (200) est coordonné un intervalle de temps d'émission dans un intervalle d'émission prédéterminé pour émettre des données, et dans lequel les intervalles de temps d'émission sont différents ; et
une entité de serveur (300) selon la revendication 8, qui est conçue afin de coordonner à chaque dispositif de détection (100) du groupe (200) un intervalle de temps d'émission dans l'intervalle d'émission prédéterminé.

10. Système de communication (400) selon la revendication 9, comportant :
un autre groupe (200) de dispositifs de détection (100) selon une des revendications 1 à 7, dans lequel à chaque dispositif de détection (100) de l'autre groupe (200) est coordonné un intervalle de temps d'émission dans l'intervalle d'émission prédéterminé ou dans un autre intervalle d'émission pour émettre des données, et dans lequel les intervalles de temps d'émission sont différents ; et
une autre entité de serveur (300) selon la revendication 9, qui est conçue afin de coordonner à chaque dispositif de détection (100) de l'autre groupe (200) un intervalle de temps d'émission dans l'intervalle d'émission prédéterminé ou dans l'autre intervalle d'émission.

11. Système de communication (400) selon la revendication 10, dans lequel le réseau de communication (401) comprend un réseau de communication de cinquième génération (5G), dans lequel le réseau de communication (401) comprend un sous-réseau, notamment une tranche, et un autre sous-réseau, notamment une autre tranche, dans lequel le groupe (200) de dispositifs de détection (100) et l'entité de service (300) sont coordonnés au sous-réseau, et dans lequel l'autre groupe (200) de dispositifs de détection (100) et l'autre entité de serveur (300) sont coordonnés à l'autre sous-réseau.

12. Procédé (500) de détection d'une grandeur physique en utilisant un dispositif de détection (100), dans lequel le dispositif de détection (100) comprend un détecteur (101) et une interface de communication (103), dans lequel le dispositif de détection (100) est coordonné à un groupe (200) de dispositifs de détection (100), dans lequel une identification est coordonnée à chaque dispositif de détection (100) du groupe (200) de dispositifs de détection (100), dans lequel le groupe (200) de dispositifs de détection (100) est conçu afin de communiquer via un réseau de communication (401) avec une entité de serveur (300), comprenant de :
détecter (501) la grandeur physique par l'intermédiaire du détecteur (101) ;
émettre (503) des données par l'intermédiaire du détecteur (101), qui représentent la grandeur physique ;
recevoir (505) un signal de diffusion par l'entité de serveur (300) via le réseau de communication (401) par l'intermédiaire de l'interface de communication (103),
dans lequel le signal de diffusion affiche une occupation des intervalles de temps d'émission dans un intervalle d'émission prédéterminé en coordonnant des identifications des dispositifs de détection (100) avec des intervalles de temps d'émission ;
sélectionner (507) un intervalle de temps d'émission libre de l'intervalle de temps prédéterminé via l'intervalle de communication (103), au cas où l'identification du dispositif de détection (100) n'est coordonnée à aucun intervalle de temps d'émission ;
émettre (509) les données dans l'intervalle de temps d'émission sélectionné via le réseau de communication (401) vers l'entité de serveur (300) par l'intermédiaire de l'interface de communication (103),
**caractérisé en ce que**
le dispositif de détection (100) et les autres dispositifs de détection (100) du groupe (200) émettent respectivement les données du dispositif de détection et les données des autres dispositifs de détection du groupe (200) dans les intervalles de temps d'émission également par diffusion vers tous les dispositifs de détection (100) du même groupe (200),
dans lequel les dispositifs de détection (100) du groupe (200) sont positionnés sur la réception dans les intervalles de temps d'émission qui ne leur sont pas coordonnés.

13. Programme informatique comportant un code de programme pour mettre en œuvre le procédé (500) selon la revendication 12, lorsque le code de programme est exécuté sur un ordinateur.
